# EUROPEAN PATENT APPLICATION

(11) **EP 4 851 118 A1**
(43) Date of publication of application: **09.12.2026**
(21) Application number: 25785927.2
(22) Date of filing: 09.04.2025
(51) Int. Cl.: C03C 10/12, C03C 10/04, C03C 10/02, C03C 3/097, C03C 21/00

(54) **CHEMICALLY STRENGTHENED GLASS CERAMIC, COVER-PLATE GLASS, ELECTRONIC DEVICE AND GLASS APPARATUS**

(30) Priority: 11.04.2024 CN 202410436179
(71) Applicant: Chongqing Aureavia Hi-Tech Glass Co., Ltd., Chongqing 400713 (CN)
(72) Inventor: ZHOU, Jingpeng, Chongqing 400713 (CN); HUANG, Hao, Chongqing 400713 (CN); LIU, Zhiqiang, Chongqing 400713 (CN); LUO, Feng, Chongqing 400713 (CN); TIAN, Qian, Chongqing 400713 (CN)
(74) Representative: IPAZ
(86) International application number: PCT/CN2025/088039
(87) International publication number: WO 2025/214402

(57) **Abstract**

The present disclosure belongs to the technical field of glass-ceramics, and provides a chemically strengthened glass-ceramic, cover glass, an electronic device, and a glass article. By making the chemically strengthened glass-ceramic satisfy a specific crystalline phase structure and making the thickness and stress structure of the chemically strengthened glass-ceramic satisfy specific requirements, the present disclosure well achieves a synergistic cooperation among thickness, crystalline phase structure, and stress structure, thereby better improving the damage resistance performance of the chemically strengthened glass-ceramic, enabling the chemically strengthened glass-ceramic at different thicknesses to satisfy high strength performance requirements, and ensuring that the chemically strengthened glass-ceramic at different thicknesses has both excellent resistance performance to penetration by sharp objects and excellent resistance performance to drop damage on rough surfaces.

## Description

### CROSS-REFERENCE TO RELATED APPLICATIONS

The present disclosure claims the priority to Chinese patent application No. CN202410436179.9, titled "CHEMICALLY STRENGTHENED GLASS CERAMIC, COVER-PLATE GLASS, ELECTRONIC DEVICE AND GLASS APPARATUS", filed before the China National Intellectual Property Administration on April 11, 2024, which is incorporated into the present disclosure by reference in its entirety.

### TECHNICAL FIELD

The present disclosure relates to the technical field of glass-ceramic, and in particular to a chemically strengthened glass-ceramic, a cover glass, an electronic device, and a glass article.

### BACKGROUND

With the popularization of electronic products, electronic devices such as mobile phones, watches, and tablets have become an indispensable part of daily life, and the damage resistance performance of the cover glass used for electronic device screens has also become one of the hot issues of concern in the market. In order to improve the damage resistance performance of cover glass, the cover industry has successively introduced chemically strengthened glass-ceramics, which generally have better performance than ordinary glass.

However, in different electronic devices, there are different requirements for the thickness of the cover glass, and the change in thickness will cause the mechanical performance of the chemically strengthened glass-ceramic to also change. Some chemically strengthened glass-ceramics even experience a sharp decline in performance when the thickness becomes thinner, making it difficult to meet the market demand for large-screen, light and thin electronic devices.

Currently, common situations of surface cracking or surface damage of electronic device cover glass include: sharply protruding objects colliding with the cover glass surface and penetrating or piercing through the cover glass, and an electronic device falling on rough ground, causing the cover glass to crack or break upon impact. For example, when an electronic device (such as a mobile phone, tablet, etc.) accidentally falls on a gravel road or an asphalt road with grit or sharply protruding angular stones, the cover glass used for its screen is very prone to colliding with sharply protruding objects and/or being penetrated or even pierced and broken by sharply protruding objects, which not only directly affects the appearance of the electronic device screen but also affects its normal use.

Therefore, in order to reduce the probability of surface damage and breakage caused by impacts from sharp objects on the cover glass of electronic device screens, and thereby ensure safe and stable operation of the electronic device, it is necessary to provide a chemically strengthened glass-ceramic that can always maintain excellent resistance performance to penetration by sharp objects and excellent resistance performance to drop damage on rough surfaces at different thicknesses.

It should be noted that this part of the present disclosure only provides background art related to the present disclosure and does not necessarily constitute prior art or common general knowledge.

### SUMMARY

The present disclosure provides a chemically strengthened glass-ceramic capable of maintaining high mechanical strength performance, excellent resistance performance to penetration by sharp objects, and excellent resistance performance to drop damage on rough surfaces at different thicknesses, as well as a cover glass, an electronic device, and a glass article comprising the chemically strengthened glass-ceramic.

In a first aspect, a chemically strengthened glass-ceramic is provided. The chemically strengthened glass-ceramic comprises a petalite crystalline phase and a lithium disilicate crystalline phase, wherein the petalite crystalline phase and the lithium disilicate crystalline phase have a higher mass percentage than other crystalline phases present in the chemically strengthened glass-ceramic;
the chemically strengthened glass-ceramic has a compressive stress layer on a surface thereof and has a tensile stress inside; the chemically strengthened glass-ceramic satisfies: $90 μm \leq DOL _ 0 ;$ $A = {T}^{1.5} \times {\int }_{0}^{80} CS \left(t\right) dt / 1000 ,$ a value of *A* is 5 to 15;
wherein *T* is a thickness of the chemically strengthened glass-ceramic, in mm; t is a depth from a main surface of the chemically strengthened glass-ceramic, *CS*(t) is a compressive stress value at depth t, ${\int }_{0}^{80} CS \left(t\right) dt$ is a compressive stress integral of the compressive stress layer from any main surface of the chemically strengthened glass-ceramic to a depth of 80 µm from the main surface, in MPa·µm; in formula *A*, data are substituted for calculation according to the above unit requirements, and a calculation result is obtained, wherein only numerical values are used in the calculation, with units being disregarded. By making the chemically strengthened glass-ceramic satisfy specific crystalline phase structures and the requirements of formula *A*, the present disclosure not only ensures that the thickness of the chemically strengthened glass-ceramic satisfies the application requirements of different electronic devices, but also well achieves a synergistic cooperation among thickness, crystalline phase structure, and stress structure, thereby better improving the damage resistance performance of the chemically strengthened glass-ceramic, and in particular ensuring the obtainment of a chemically strengthened glass-ceramic product that has both excellent resistance performance to penetration by sharp objects and excellent resistance performance to drop damage on rough surfaces. In addition, the chemically strengthened glass-ceramic of the present disclosure also has excellent resistance performance to penetration by sharp objects and excellent resistance performance to drop damage on rough surfaces even when the thickness is relatively thin, which can reduce the probability of damage to electronic device screens, ensure the aesthetics of the screen, and thus meet the market demand for large-screen, light and thin electronic devices.

As an optional embodiment, the chemically strengthened glass-ceramic satisfies: $B = \left|CT_AV\right| \times DOL _ 0 \times \left(1000\times {T}^{2.8}-2\times DOL_0\times {T}^{1.8}\right) / 1000 ,$ a value of *B* is 550 to 3500;
wherein *T* is the thickness of the chemically strengthened glass-ceramic, in mm; |CT_AV| is an absolute value of an average tensile stress, in MPa; DOL_0 is a depth of the compressive stress layer, in µm; in formula *B*, data are substituted for calculation according to the above unit requirements, and a calculation result is obtained, wherein only numerical values are used in the calculation, with units being disregarded. By making the thickness and the stress of the chemically strengthened glass-ceramic satisfy a specific relationship, it is beneficial to better improve the damage resistance performance of the chemically strengthened glass-ceramic.

As an optional embodiment, the thickness of the chemically strengthened glass-ceramic *T* ≤ 1 mm, preferably, the thickness of the chemically strengthened glass-ceramic *T* is 0.30 mm to 1 mm, more preferably, the thickness of the chemically strengthened glass-ceramic *T* is 0.35 mm to 0.7 mm. Electronic devices often pursue lightness and thinness. When the thickness is too large, on the one hand, it increases weight, and on the other hand, it leads to poor optical effects, which is not conducive to achieving high transparency.

As an optional embodiment, the chemically strengthened glass-ceramic satisfies: $35000 MPa ⋅ μm \geq {\int }_{0}^{B 0} CS \left(t\right) dt \geq 10000 MPa ⋅ μm ,$ preferably, $30000 MPa ⋅ μm \geq {\int }_{0}^{B 0} CS \left(t\right) dt \geq 10000 MPa ⋅ μm ,$ more preferably, $30000 MPa ⋅ μm \geq {\int }_{0}^{B 0} CS \left(t\right) dt \geq 15000 MPa ⋅ μm ;$ the larger the area enclosed by the compressive stress curve and the straight line y = 0, the straight line x = 0, and the straight line x = 80 µm, the larger the stress intensity value within the range from a compressive stress layer depth of 0 µm to a compressive stress layer depth of 80 µm, indicating that their surface stress level is better, which is beneficial for ensuring that the chemically strengthened glass-ceramic achieves an excellent resistance effect to penetration by sharp objects and an excellent resistance effect to drop damage on rough surfaces.

As an optional embodiment, the chemically strengthened glass-ceramic satisfies:
70 MPa ≤ |CT_AV| ≤ 160 MPa, preferably, 77 MPa ≤ |CT_AV| ≤ 160 MPa, more preferably, 110 MPa ≤ |CT_AV| ≤ 150 MPa, wherein |CT_AV| is the absolute value of the average tensile stress; and/or,
0.17 ≤ DOL_0/T ≤ 0.25, preferably, 0.18 ≤ DOL_0/T ≤ 0.25; and/or,
50000 MPa/mm ≤ CT_LD ≤ 80000 MPa/mm, preferably, 55000 MPa/mm ≤ CT_LD ≤ 80000 MPa/mm, more preferably, 61000 MPa/mm ≤ CT_LD ≤ 75000 MPa/mm, wherein CT_LD is a tensile stress linear density; and/or,
90 µm ≤ DOL_0, preferably, 90 µm ≤ DOL_0 ≤ 200 µm, more preferably, 95 µm ≤ DOL_0 ≤ 150 µm, wherein DOL_0 is the depth of the compressive stress layer; by making the chemically strengthened glass-ceramic satisfy a suitable stress structure, it is beneficial to obtain a chemically strengthened glass-ceramic product with a relatively high stress level, thereby facilitating the improvement of mechanical strength performance by the stress structure and ensuring that the chemically strengthened glass-ceramic has excellent damage resistance performance.

As an optional embodiment, the chemically strengthened glass-ceramic satisfies:
a value of *T* is: 0.475 mm, 0.505 mm, 0.545 mm, 0.590 mm, 0.620 mm, 0.650 mm, 0.500 mm or 0.400 mm; and/or,
the value of *A* is: 7.635, 5.809, 9.060, 5.907, 5.426, 7.067, 6.609, 9.628, 5.999, 9.782, 6.541, 12.510, 6.503, 5.806 or 5.430; and/or,
the value of *B* is: 955.0, 877.3, 1175.9, 1043.3, 1209.0, 1320.5, 1398.7, 1989.5, 1621.4, 2339.9, 1729.7, 2879.3, 995.6, 895.9 or 562.9; and/or,
a value of ${\int }_{0}^{80} CS \left(t\right) dt$ is: 23322.83 MPa·µm, 17745.62 MPa·µm, 25245.12 MPa·µm, 16459.20 MPa·µm, 13485.35 MPa·µm, 17564.52 MPa·µm, 14582.65 MPa·µm, 21245.19 MPa·µm, 12287.36 MPa·µm, 20036.85 MPa·µm, 12482.65 MPa·µm, 23872.85 MPa·µm, 18393.52 MPa·µm, 16421.45 MPa·µm or 21464.39 MPa·µm; and/or,
a value of DOL_0 is: 111.48 µm, 110.32 µm, 113.85 µm, 114.65 µm, 113.82 µm, 124.84 µm, 116.25 µm, 129.90 µm, 114.26 µm, 136.58 µm, 115.54 µm, 144.85 µm, 109.58 µm, 108.86 µm or 98.00 µm; and/or,
a value of |CT_AV| is: 129.8 MPa, 119.4 MPa, 127.4 MPa, 112.9 MPa, 99.8 MPa, 106.8 MPa, 87.0 MPa, 119.9 MPa, 85.7 MPa, 116.8 MPa, 77.6 MPa, 119.8 MPa, 112.66 MPa, 101.5 MPa or 146.5 MPa; and/or,
a value of DOL_0/T is: 0.25, 0.23, 0.21, 0.20, 0.22, 0.19 or 0.18; and/or,
a value of CT_LD is: 68873.25 MPa/mm, 63938.07 MPa/mm, 69956.48 MPa/mm, 61636.69 MPa/mm, 58114.73 MPa/mm, 57871.88 MPa/mm, 52716.10 MPa/mm, 67103.36 MPa/mm, 54112.64 MPa/mm, 65328.99 MPa/mm, 50012.60 MPa/mm, 66406.06 MPa/mm, 63278.87 MPa/mm, 57316.32 MPa/mm or 74715.00 MPa/mm.

As an optional embodiment, a composition at a center or of a tensile stress layer of the chemically strengthened glass-ceramic comprises:
SiO₂: 64% to 70%, Al₂O₃: 3.5% to 5.0%, P₂O₅: 0.7% to 1.5%, ZrO₂: 1.5% to 3%, Na₂O: 0% to 3%, K₂O: 0% to 1%, Li₂O: 20% to 26%, CaO: 0% to 1.5%, B₂O₃: 0% to 2%, based on mole percentage of oxides. By satisfying a specific glass composition, it is beneficial to obtain a glass-ceramic that satisfies a specific crystalline phase structure and to obtain a chemically strengthened glass-ceramic that satisfies a specific stress structure.

As an optional embodiment, the composition at the center or of the tensile stress layer of the chemically strengthened glass-ceramic comprises:
a mole percentage of SiO₂ is 64% to 69.5%, preferably, the mole percentage of SiO₂ is 67.5% to 69.5%; and/or,
a mole percentage of Al₂O₃ is 4% to 4.8%, preferably, the mole percentage of Al₂O₃ is 4% to 4.5%; and/or,
a mole percentage of P₂O₅ is 0.8% to 1.5%, preferably, the mole percentage of P₂O₅ is 0.8% to 1.2%; and/or,
a mole percentage of ZrO₂ is 2.5% to 3%, preferably, the mole percentage of ZrO₂ is 2.6% to 3%; and/or,
a mole percentage of Na₂O is 0% to 2%, preferably, the mole percentage of Na₂O is 0% to 1%; and/or,
a mole percentage of K₂O is 0% to 0.5%, preferably, the mole percentage of K₂O is 0% to 0.3%; and/or,
a mole percentage of Li₂O is 20.5% to 25%, preferably, the mole percentage of Li₂O is 20.5% to 23.5%; and/or,
a mole percentage of CaO is 0% to 1%, preferably, the mole percentage of CaO is 0.5% to 1%; and/or,
a mole percentage of B₂O₃ is 0% to 1%, preferably, the mole percentage of B₂O₃ is 0% to 0.8%;
based on mole percentage of oxides.

As an optional embodiment, the composition at the center or of the tensile stress layer of the chemically strengthened glass-ceramic comprises:
the mole percentage of SiO₂ is 68.02%, 64.39% or 68.74%; and/or,
the mole percentage of Al₂O₃ is 4.30%, 4.07% or 4.41%; and/or,
the mole percentage of P₂O₅ is 1.17%, 1.14% or 0.95%; and/or,
the mole percentage of ZrO₂ is 2.88%, 2.98% or 2.89%; and/or,
the mole percentage of Na₂O is 0.15%, 0.78% or 0%; and/or,
the mole percentage of K₂O is 0.07% or 0%; and/or,
the mole percentage of Li₂O is 22.40%, 25.68% or 21.48%; and/or,
the mole percentage of CaO is 0.89%, 0.93% or 0.73%; and/or,
the mole percentage of B₂O₃ is 0.08%, 0.8% or 0%;
based on mole percentage of oxides.

As an optional embodiment, in the composition at the center or of the tensile stress layer of the chemically strengthened glass-ceramic, the mole percentage of ZrO₂ [ZrO₂], the mole percentage of CaO [CaO], the mole percentage of P₂O₅ [P₂O₅], the mole percentage of Na₂O [Na₂O], the mole percentage of K₂O [K₂O], the mole percentage of B₂O₃ [B₂O₃], the mole percentage of Al₂O₃ [Al₂O₃] and the mole percentage of SiO₂ [SiO₂] satisfy the following relationships:
3.5% ≤ ([ZrO₂] + [CaO] + [P₂O₅])/EXP([Na₂O] + [K₂O] + [B₂O₃]) ≤ 5.5%, preferably, 4.5% ≤ ([ZrO₂] + [CaO] + [P₂O₅])/EXP([Na₂O] + [K₂O] + [B₂O₃]) ≤ 5%; and/or,
5% ≤ [P₂O₅] + [Al₂O₃] ≤ 6%, preferably, 5.2% ≤ [P₂O₅] + [Al₂O₃] ≤ 5.5%; and/or,
15 ≤ ([SiO₂] + 2 × [B₂O₃])/[Al₂O₃] ≤ 17, preferably, 15 ≤ ([SiO₂] + 2 × [B₂O₃])/[Al₂O₃] ≤ 16.5.

As an optional embodiment, in the composition at the center or of the tensile stress layer of the chemically strengthened glass-ceramic, the mole percentage of ZrO₂ [ZrO₂], the mole percentage of CaO [CaO], the mole percentage of P₂O₅ [P₂O₅], the mole percentage of Na₂O [Na₂O], the mole percentage of K₂O [K₂O], the mole percentage of B₂O₃ [B₂O₃], the mole percentage of Al₂O₃ [Al₂O₃] and the mole percentage of SiO₂ [SiO₂] satisfy the following relationships:
a value of ([ZrO₂] + [CaO] + [P₂O₅])/EXP([Na₂O] + [K₂O] + [B₂O₃]) is 4.97% or 4.53%; and/or,
a value of [P₂O₅] + [Al₂O₃] is 5.21%, 5.47% or 5.36%; and/or
a value of ([SiO₂] + 2 × [B₂O₃])/[Al₂O₃] is 15.86, 15.82 or 15.95.

As an optional embodiment, a sum of masses of the petalite crystalline phase and the lithium disilicate crystalline phase accounts for more than 80 wt% of all crystalline phases of the chemically strengthened glass-ceramic,
preferably, the sum of the masses of the petalite crystalline phase and the lithium disilicate crystalline phase accounts for 85 wt% to 100 wt% of all crystalline phases of the chemically strengthened glass-ceramic.

As an optional embodiment, in the chemically strengthened glass-ceramic, an average grain size does not exceed 100 nm, preferably, the average grain size does not exceed 50 nm, more preferably, the average grain size is 15 nm to 30 nm; and/or
a crystallinity of the chemically strengthened glass-ceramic is not less than 70%, preferably, the crystallinity of the chemically strengthened glass-ceramic is 80% to 90%, more preferably, the crystallinity of the chemically strengthened glass-ceramic is 85% to 90%.

As an optional embodiment, a Young's modulus of the chemically strengthened glass-ceramic is greater than 100 GPa, preferably, the Young's modulus is greater than 105 GPa, more preferably, the Young's modulus is 110 GPa to 120 GPa.

As an optional embodiment, when the thickness of the chemically strengthened glass-ceramic is 0.30 mm to 1 mm, a b-value is < 1.0, preferably, the b-value is < 0.70, more preferably, the b-value is ≤ 0.60; and/or,
the chemically strengthened glass-ceramic is transparent in a visible light wavelength range, preferably, for light with a wavelength of 550 nm, a transmittance of the chemically strengthened glass-ceramic with the thickness ranging from 0.3 mm to 1 mm is ≥ 85%, preferably, the transmittance is ≥ 90.00%, more preferably, the transmittance is ≥ 90.29%.

As an optional embodiment, on a compressive stress curve of the chemically strengthened glass-ceramic, an absolute value of slope at a depth of 80 µm |K_{80µm}| satisfies 2.5 MPa/µm ≤ |K_{80µm}| ≤ 4.5 MPa/µm, preferably 3.0 MPa/µm ≤ |K_{80µm}| ≤ 4.5 MPa/µm.

As an optional embodiment, on the compressive stress curve of the chemically strengthened glass-ceramic, the absolute value of the slope at a depth of 80 µm |K_{80µm}| is 3.21 MPa/µm, 2.55 MPa/µm, 4.05 MPa/µm, 3.05 MPa/µm, 2.85 MPa/µm, 2.81 MPa/µm, 3.17 MPa/µm, 3.10 MPa/µm, 3.55 MPa/µm, 3.00 MPa/µm, 3.85 MPa/µm, 3.26 MPa/µm, 3.38 MPa/µm, 2.57 MPa/µm or 3.78 MPa/µm.

As an optional embodiment, when using a Mohs hardness pen with a Mohs hardness rating of 6 and a pen tip presenting an angle of 35° in horizontal projection, and subjecting the pen tip of the Mohs hardness pen to vertically penetrate into the chemically strengthened glass-ceramic with the thickness not less than 0.35 mm along the thickness direction, and when a penetration depth is 80 µm, a required applied load F_{80µm} is ≥ 100 N, preferably, the required applied load F_{80µm} is ≥ 110 N; and/or,
when subjecting the chemically strengthened glass-ceramic with the thickness not less than 0.35 mm to a sandpaper drop resistance test and using an 80-mesh sandpaper, an average drop height in the sandpaper drop resistance test of the chemically strengthened glass-ceramic is ≥ 0.8 m, preferably, the average drop height in the sandpaper drop resistance test of the chemically strengthened glass-ceramic is ≥ 1.0 m.

In a second aspect, a glass article is provided, and the glass article comprises the chemically strengthened glass-ceramic according to any embodiment of the first aspect.

In a third aspect, a cover glass is provided, and the cover glass is prepared from the chemically strengthened glass-ceramic according to any embodiment of the first aspect and/or the cover glass comprises the chemically strengthened glass-ceramic according to any embodiment of the first aspect. The cover glass may be a display screen cover plate, a back cover, or a camera protection cover plate of an electronic device.

In a fourth aspect, an electronic device is provided, and the electronic device comprises the chemically strengthened glass-ceramic according to any embodiment of the first aspect.

As an optional embodiment, the electronic device comprises a housing assembled on the outside of the electronic device and a circuit board located inside the housing, and the housing comprises the chemically strengthened glass-ceramic according to any embodiment of the first aspect.

As an optional embodiment, the housing comprises a display screen cover plate assembled on the front side of the electronic device, and the display screen cover plate comprises the chemically strengthened glass-ceramic according to any embodiment of the first aspect.

As an optional embodiment, the housing comprises a back cover assembled on the rear side of the electronic device, and the back cover comprises the chemically strengthened glass-ceramic according to any embodiment of the first aspect.

As an optional embodiment, the electronic device further comprises a camera assembly located inside the housing, the housing comprises a camera protection cover plate, the camera protection cover plate is disposed over the camera assembly, and the camera protection cover plate comprises the chemically strengthened glass-ceramic according to any embodiment of the first aspect.

As an optional embodiment, the electronic device further comprises a middle frame located between the display module and the housing, and the middle frame comprises the chemically strengthened glass-ceramic according to any embodiment of the first aspect.

In some embodiments, the housing may partially use the chemically strengthened glass-ceramic, or may entirely use the chemically strengthened glass-ceramic. In the electronic device of the present disclosure, one or more selected from the group consisting of the display screen cover plate, the back cover, the camera protection cover plate, and the middle frame may use the chemically strengthened glass-ceramic according to any embodiment of the first aspect.

Compared with the prior art, one or more technical solutions of the present disclosure include the following advantages:
By making the chemically strengthened glass-ceramic satisfy a specific crystalline phase structure and making the thickness and stress structure of the chemically strengthened glass-ceramic satisfy specific requirements, the present disclosure well achieves a synergistic cooperation among thickness, crystalline phase structure, and stress structure, thereby better improving the damage resistance performance of the chemically strengthened glass-ceramic, enabling the chemically strengthened glass-ceramic at different thicknesses to satisfy high strength performance requirements, and ensuring that the chemically strengthened glass-ceramic at different thicknesses has both excellent resistance performance to penetration by sharp objects and excellent resistance performance to drop damage on rough surfaces. In particular, for cases where the thickness is required to be relatively thin, the chemically strengthened glass-ceramic provided in the present disclosure improves the problem that the existing chemically strengthened glass-ceramic has a need to improve the resistance to penetration by sharp objects and the resistance to drop damage on rough ground after the thickness becomes thinner, and endows the ultra-thin chemically strengthened glass-ceramic with excellent resistance performance to penetration by sharp objects and excellent resistance performance to drop damage on rough surfaces. At the same time, the chemically strengthened glass-ceramic of the present disclosure maintains excellent optical performance and can satisfy the application requirements of cover glass.

### BRIEF DESCRIPTION OF THE DRAWINGS

The accompanying drawings, which are incorporated in and constitute a part of this specification, illustrate embodiments consistent with the present disclosure and serve to explain the principles of the present disclosure together with the specification.

In order to more clearly illustrate the technical solutions in the embodiments of the present disclosure or the prior art, the accompanying drawings required for use in the description of the embodiments or the prior art will be briefly introduced below. Obviously, for those of ordinary skill in the art, other drawings can be obtained based on these drawings without creative efforts.
FIG. 1 is an XRD pattern of the glass-ceramic of Example 1 of the present disclosure, in which "S1" refers to Example 1, and in FIG. 2 and FIG. 4, "S1" also refers to Example 1;
FIG. 2 is a comparison diagram of XRD patterns of the glass-ceramic and the chemically strengthened glass-ceramic of Example 1 of the present disclosure;
FIG. 3 is a transmittance curve of the glass-ceramic provided in Example 1 of the present disclosure;
FIG. 4 is a comparison diagram of transmittances of the glass-ceramic and the chemically strengthened glass-ceramic provided in Example 1 of the present disclosure;
FIG. 5 is a schematic diagram of the penetration resistance test performed in the present disclosure;
FIG. 6 is a partial structural schematic diagram of a Mohs hardness pen used in the penetration resistance test performed in the present disclosure;
FIG. 7 is a surface compressive stress curve diagram of the chemically strengthened glass-ceramic of Example 3 and Comparative Example 2 of the present disclosure;
FIG. 8 is a relationship diagram of penetration depth and the applied force when performing a penetration resistance test with an M6 Mohs hardness pen on the chemically strengthened glass-ceramic of Example 3 and Comparative Example 2 of the present disclosure;
FIG. 9 is a schematic front structural diagram of an electronic device mentioned in the embodiments of the present disclosure;
FIG. 10 is a schematic rear structural diagram of an electronic device mentioned in the embodiments of the present disclosure;
FIG. 11 is a schematic structural diagram of an electronic device mentioned in the embodiments of the present disclosure.

Reference numerals: 1 - housing; 11 - display screen cover plate; 12 - back cover; 13 - camera protection cover plate; 2 - camera assembly; 3 - middle frame; 4 - display module.

### DETAILED DESCRIPTION

The embodiments of the present disclosure will be described in detail below with reference to the examples, but those skilled in the art will understand that the following examples are only for illustrating the present disclosure and should not be construed as limiting the scope of the present disclosure. In the examples, if no specific conditions are indicated, the conditions are conventional conditions or conditions recommended by the manufacturer. If no manufacturer is indicated for the reagents or instruments used, they are conventional products commercially available.

The endpoints and any values of the ranges disclosed herein are not limited to the precise ranges or values, and these ranges or values should be understood to include values close to these ranges or values. For numerical ranges, the endpoint values of each range, the endpoint values and individual point values of each range, and individual point values can be combined with each other to obtain one or more new numerical ranges, which should be regarded as specifically disclosed herein. Herein, the terms "optional", "optionally" and other similar expressions mean may be included or may not be included (or may be present or may not be present). The term "and/or" used herein is inclusive, for example, "A and/or B" means only A, or only B, or both A and B.

### Term explanations and test methods:

In the present disclosure, glass-ceramic is a type of solid composite material that contains both a glass phase and a crystalline phase (or referred to as a microcrystalline phase or crystallized phase) prepared by targeted controlled heat treatment of a base glass. Glass-ceramic is also referred to as microcrystalline glass, crystallized glass, or crystalline glass.

In the present disclosure, chemically strengthened glass-ceramic refers to a solid composite material obtained after a glass-ceramic is subjected to a chemical strengthening treatment. It should be understood that during the chemical strengthening treatment, alkali metal ions with a larger ionic radius (e.g., potassium ions or sodium ions) in a molten salt bath (or referred to as a fused-salt bath) replace alkali metal ions with a smaller ionic radius (e.g., sodium ions or lithium ions) in the glass-ceramic, thereby generating a volume difference of exchanged ions and producing a compressive stress (or referred to as compression stress) on the surface of the glass-ceramic.

In the present disclosure, the base glass refers to glass that has not been subjected to nucleation treatment, crystallization treatment, and strengthening treatment, or referred to as parent glass.

In the present disclosure, the composition at a center of the chemically strengthened glass-ceramic refers to the composition at or near the center of the depth or thickness of the chemically strengthened glass-ceramic, i.e., the composition of the region in the chemically strengthened glass-ceramic that has not undergone ion exchange.

In the present disclosure, the visible light wavelength range refers to 360 nm to 740 nm.

In the present disclosure, the main crystalline phase (or referred to as the primary crystalline phase) refers to a crystalline phase having a higher mass content than other crystalline phases present in the glass-ceramic or chemically strengthened glass-ceramic.

In the present disclosure, the main surface refers to the surface with the largest area, for example, the upper surface or lower surface of a horizontally placed glass-ceramic sheet.

In the present disclosure, crystallinity refers to the percentage of the total mass of the crystalline phases in the glass-ceramic or chemically strengthened glass-ceramic relative to the mass of the glass-ceramic or chemically strengthened glass-ceramic, or referred to as the total crystalline phase content in the glass-ceramic or chemically strengthened glass-ceramic.

In the present disclosure, when light of a certain wavelength is irradiated on the main surface of the glass-ceramic or chemically strengthened glass-ceramic, the light undergoes reflection, absorption, and transmission, and the ratio of the intensity of the transmitted portion to the intensity of the incident light is transmittance.

In the present disclosure, crystallized glass raw material refers to a glass raw material that has been heat-treated for a period of time to achieve a certain crystallinity, but has not yet reached the target crystallinity, and can continue to crystallize upon heating to reach the target crystallinity.

In the present disclosure, CT_LD refers to the tensile stress linear density in MPa/mm. It should be understood that after the glass-ceramic is placed in a molten salt bath for ion exchange, a compressive stress layer (or referred to as a compression stress layer) is formed on the surface of the glass-ceramic, and a tensile stress layer (or referred to as a stretching stress layer) is formed inside the glass-ceramic. Exemplarily, during the chemical strengthening treatment, alkali metal ions with a larger radius in the molten salt bath undergo ion exchange with alkali metal ions with a smaller radius in the glass-ceramic, thereby forming a compressive stress layer on the surface of the glass-ceramic and forming a tensile stress layer inside the glass-ceramic, i.e., a chemically strengthened glass-ceramic comprising a compressive stress layer and a tensile stress layer is prepared. In the present disclosure, CT_LD is calculated by the following formula: $CT_LD = \left|CT_AV\right| \times \frac{\left(1000\times t-2\times DOL_0\right)}{t}$ wherein t is the thickness of the chemically strengthened glass-ceramic, in mm; DOL_0 is the depth of the compressive stress layer of the chemically strengthened glass-ceramic, in µm; |CT_AV| is the absolute value of the average tensile stress of the tensile stress layer of the chemically strengthened glass-ceramic, in MPa. It should be understood that in the calculation formula of the tensile stress linear density, the data are substituted for calculation according to the above unit requirements, and the calculation result is obtained, wherein only numerical values are used in the calculation, with units being disregarded.

In the present disclosure, CS_80 refers to the compressive stress value at a depth of 80 µm from the main surface of the chemically strengthened glass-ceramic, or the compressive stress value at a distance of 80 µm from the main surface of the chemically strengthened glass-ceramic, in MPa, measured by an SLP-2000 stress meter.

In the present disclosure, |CT_AV| refers to the absolute value of the average tensile stress in MPa, specifically the absolute value of the average of all tensile stresses in the tensile stress layer, measured by an SLP-2000 stress meter.

In the present disclosure, DOL_0 refers to the depth of the compressive stress layer, or the depth of the compression stress layer, specifically the distance from any main surface of the chemically strengthened glass-ceramic to a position near the surface where the compressive stress is zero, measured by an SLP-2000 stress meter.

In the present disclosure, the test method for the aforementioned stress performance is specifically as follows: an SLP-2000 stress meter is used for testing, with a light source wavelength of 518 nm, SOC = 25.5 (nm/cm)/MPa, refractive index = 1.54, and exposure time: 300 µsec. When testing the stress performance of the chemically strengthened glass-ceramic, an index matching fluid is first dropped onto the stress meter, and then the chemically strengthened glass-ceramic sample to be tested is wiped clean and placed on the test path to test its stress value. The stress meter is SLP-2000, and the index matching fluid used is an index matching fluid with a refractive index of 1.51. Then, the tensile stress linear density (CT_LD) value of the chemically strengthened glass-ceramic is calculated by the aforementioned formula for tensile stress linear density; the value of ${\int }_{0}^{80} CS \left(t\right) dt$ is calculated from the stress data of the chemically strengthened glass-ceramic measured by the SLP-2000.

In the present disclosure, a b-value is used to characterize the yellow-blue value of a material. The b-value in the present disclosure is the transmitted light b-value, and a positive b-value indicates that the material is bluish.

In the present disclosure, nucleation treatment refers to the growth of small crystal nuclei from the nucleating substances in the base glass through heat treatment; crystallization treatment refers to the growth of a certain crystal based on the crystal nuclei through heat treatment.

In the present disclosure, the thickness is measured by a micrometer. It should be understood that in the thickness direction of the glass-ceramic sample, the degree of ion exchange varies in a gradient from the surface to the center, and the total increase in Na-K and/or Li-Na exchange amount (mass) generally does not exceed 1.5% of the total mass of the sample, so the expansion effect in the thickness direction is extremely slight, and it can be approximately considered that the thickness does not change substantially. That is, before and after chemical strengthening, the thickness of the glass-ceramic changes very little and can be substantially ignored, and the thickness of the glass-ceramic is substantially the same as the thickness of the chemically strengthened glass-ceramic prepared therefrom.

In the present disclosure, the dimensions of the glass-ceramic sheet are measured using a 2D coordinate measuring machine (instrument model: Miyu MY-YXCL-4030).

In the present disclosure, Young's modulus is used to characterize the ability of glass to resist elastic deformation caused by external forces. In the present disclosure, a UMS-100 ultrasonic material characterization system is used to test the Young's modulus of the glass-ceramic through sound waves.

Thermal expansion softening point test: a sample is made into a cylinder with a diameter of 5.5 mm and a length of 20 mm, and the sample is tested using a thermal expansion instrument LINSEIS L75VD1000 to output a thermal expansion test curve. The temperature corresponding to the peak position of the curve is recorded as the thermal expansion softening point temperature of the sample.

In the present disclosure, the crystalline phases, crystallinity, and average grain size of the glass-ceramic or chemically strengthened glass-ceramic are confirmed by the XRD test. Specifically:
(1) XRD test: the glass-ceramic or chemically strengthened glass-ceramic of the present disclosure is pulverized and ground into a sample with a particle size less than 75 µm, and the ground sample is tested using an X-ray diffractometer to obtain an XRD diffraction peak curve and XRD diffraction data. The X-ray diffractometer used in the present disclosure is a Shimadzu XRD-6100, with a target material of copper, 2θ = 10° to 50°, a scanning speed of 0.2°/min, a working voltage of 40 kV, and a working current of 30 mA.
(2) Determination of crystalline phases: Jade software (JADE Standard 8.6) is used to analyze the XRD diffraction data to determine the crystalline phases in the sample.
(3) Determination of crystallinity: the XRD test results (in RAW format) are imported into the X-ray diffraction data Rietveld refinement software Jade for fitting and calculation to determine the crystallinity of the sample. Specifically, the ratio of the fitted crystalline phase peak area to the fitted total peak area is recorded as the crystallinity of the sample.
(4) Determination of average grain size: using the result data obtained from the XRD test, the average grain size (or referred to as average crystal size) of the sample is calculated according to the Scherrer formula D = Kλ/(βcosθ). Where λ is the X-ray wavelength, λ = 0.154056 nm, β is the full width at half maximum (FWHM) of the diffraction peak, K = 0.89, and θ is the Bragg diffraction angle. Specifically, the RAW format file output by the XRD instrument is subjected to curve fitting in Jade software, and Jade outputs a fitting report. According to the 2θ value and Peak FWHM value corresponding to each diffraction peak in the fitting report, the Peak FWHM value is converted into radians: β = (FWHM/180 × 3.14). The grain size of each diffraction peak is calculated by the Scherrer formula D = Kλ/(βcosθ), and then the average is taken to obtain the average grain size in the sample.

In the present disclosure, with reference to the national standard "GB/T 7962.12-2010 Test methods for colorless optical glass - Part 12: Spectral internal transmittance", a haze meter is used to test the transmittance and b-value of the glass-ceramic of the present disclosure. Specifically, a haze meter is used to test the transmittance and b-value of five glass-ceramic sheets of the same batch for different wavelengths of light. The average of the b-values measured for the five glass-ceramic sheets is recorded as the b-value result of the glass-ceramic. The average of the transmittances measured for the five glass-ceramic sheets under light with a wavelength of 550 nm is recorded as the transmittance result of the glass-ceramic under light with a wavelength of 550 nm. The haze meter used in the present disclosure is a Spectrophotometer CM-3600A from Konica Minolta, Japan, with a light receiving optical system of transmission, a dispersion method of plane diffraction grating, a wavelength range of 360 nm to 740 nm, a wavelength interval of 10 nm, and an illumination light source of pulsed xenon lamp × 4, and the instrument is placed in an environment with an ambient temperature of 24°C and an air humidity of 40%.

In the present disclosure, a Shimadzu UV-2600 Ultraviolet-Visible Spectrophotometer is also used to test the transmittance curve of the glass-ceramic under light with a wavelength ranging from 200 nm to 1000 nm.

Refractive index refers to the ratio of the propagation speed of light in a vacuum to the propagation speed of light in the medium.

Penetration resistance test: in the present disclosure, a pen tip of a Mohs hardness pen is used to penetrate the chemically strengthened glass-ceramic along the thickness direction to simulate the penetration of a sharply protruding object into the chemically strengthened glass-ceramic. The resistance to penetration by sharp objects here is obtained by a penetration test of a single sharp object, which can simulate the application scenario where the chemically strengthened glass-ceramic falls onto a ground with sharply protruding objects. The load that needs to be applied to the Mohs hardness pen when the pen tip penetrates to a depth of 80 µm, i.e., F_{80µm}, is tested. In the present disclosure, a pen with a Mohs hardness rating of 6 from Mineralab, USA, is used as the pen for testing. The reason for choosing a pen with a Mohs hardness rating of 6 is mainly that in daily life, the environment that a cover glass of an electronic device may contact, such as cement ground, fine sand ground, etc., has a hardness roughly equivalent to a Mohs hardness rating of 6. The load required to be applied when penetrating the chemically strengthened glass-ceramic to a depth of 80 µm, i.e., F_{80µm}, is used to characterize the penetration resistance performance of the sample. When the F_{80µm} value is larger, it means that the load or force required for the pen tip of the pen with a Mohs hardness rating of 6 to penetrate the chemically strengthened glass-ceramic to a depth of 80 µm is larger, indicating that the chemically strengthened glass-ceramic is more difficult to penetrate and has better penetration resistance performance.

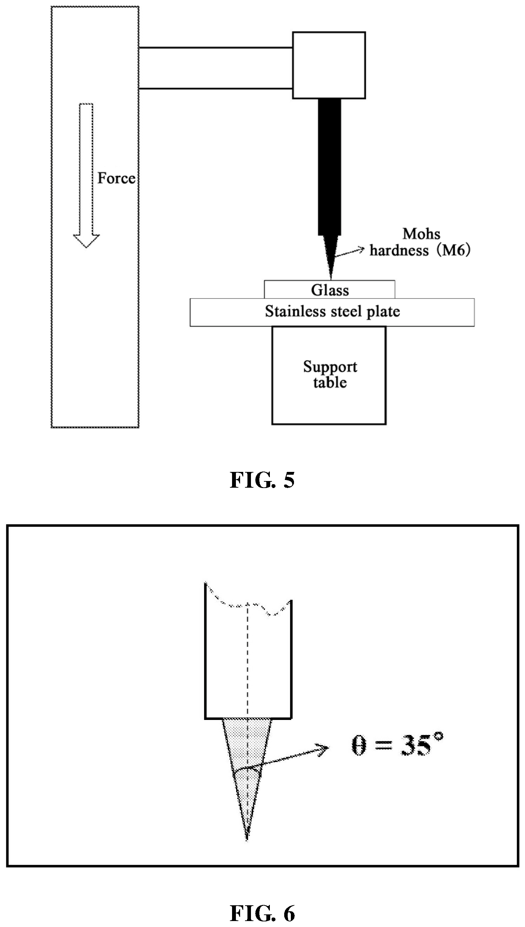

The specific operation steps of the penetration resistance test include: first, placing a stainless steel plate on the support table of a tensile testing machine (LT-850A); then, placing the chemically strengthened glass-ceramic sample sheet to be tested on the stainless steel plate; equipping an indentation pen with a Mohs hardness rating of 6 (M6) from Mineralab, USA (with a sharp angle of 35° at the pen tip, as shown in FIG. 6); starting the testing software; setting the moving speed to 1 mm/min; clicking to start the test; and having the M6 indentation pen apply a force to the center of the chemically strengthened glass-ceramic sample sheet to be tested at the set moving speed until the chemically strengthened glass-ceramic sample sheet cracks and breaks, as shown in FIG. 5. The raw data of the penetration depth and the load applied to the M6 pen tip are output using the testing software, and the load applied to the M6 pen tip when the penetration depth is 80 µm, i.e., F_{80µm}, is read as the characterization value of the penetration resistance performance of the chemically strengthened glass-ceramic sample sheet. Ten chemically strengthened glass-ceramic sample sheets of the same batch are tested, and the average of the test results is taken as the F_{80µm} of the tested chemically strengthened glass-ceramic sample sheet.

Shattering caused by local penetration refers to the phenomenon that when the glass surface collides with a harder, sharp object (such as small stones, or cement), the glass surface is locally damaged, forming a crack propagation source at the damage point. When the surface compressive stress level of the glass is insufficient to offset the energy brought by the impact of the collision, the crack propagates through the glass surface region. When the crack along the thickness direction passes through the depth of the compressive stress layer and reaches the tensile stress layer region, the crack rapidly propagates in the tensile stress region, causing the crack to penetrate the entire glass, thus causing the glass to break.

Density test: in the present disclosure, an electronic density balance SD-200L from ALFA MIRAGE, Japan, is used to test the density of the glass-ceramic.

Refractive index test: in the present disclosure, an Abbe refractometer WYA-2WAJ from Lichen Bangxi Instrument Technology Co., Ltd., Shanghai, China, is used to test the refractive index of the glass-ceramic.

The sandpaper drop resistance test for the average drop height: in the present disclosure, for a plurality of chemically strengthened glass-ceramic samples from the same example or the same comparative example, the sum of the sandpaper drop resistance heights measured for each sample is divided by the number of samples tested to obtain a value, which is recorded as the average drop height in the sandpaper drop resistance test of the tested chemically strengthened glass-ceramic, used to characterize the drop damage resistance performance of the chemically strengthened glass-ceramic. The drop damage resistance performance here is obtained by testing using uniform sandpaper, which can simulate the application scenario where the chemically strengthened glass-ceramic falls onto a ground with relatively uniform roughness.

Specifically, at least 10 samples are taken from each batch for testing, and the average drop height in the sandpaper drop resistance test $\left〈h\right〉 n = \frac{1}{n} {\sum }_{i = 1}^{n} hi ,$ wherein *n* is the number of glass samples tested for each batch, and *hi* is the sandpaper drop resistance height tested for a single sample;
wherein the test method for the sandpaper drop resistance height of a single sample is:
step 1: an 80-mesh sandpaper is attached to the lower surface of an 181 g test device, and the test device is placed on an Lvtu LT-SKDL-CD drop tester;
step 2: the chemically strengthened glass-ceramic sample to be tested is placed directly below the test device, so that the chemically strengthened glass-ceramic sample faces the sandpaper. The test device is dropped from a certain drop height to impact the chemically strengthened glass-ceramic sample located directly below the test device. If the chemically strengthened glass-ceramic sample does not break, the drop height of the test device is increased according to a certain rule, and the test device is dropped again to impact the chemically strengthened glass-ceramic sample located directly below the test device until the chemically strengthened glass-ceramic sample breaks. For example, the drop height of the test device is started from 0.4 m to perform one drop impact on the sample. If the sample does not break, the drop height of the test device is increased by 0.1 m, and the sample is dropped again. The above process is repeated until the chemically strengthened glass-ceramic sample breaks;
step 3: the drop height of the previous drop before the breakage of the chemically strengthened glass-ceramic sample is recorded as its sandpaper drop resistance height. For example, when the drop height is increased by 0.1 m each time, if the drop height at which the sample breaks is 0.5 m, then the sandpaper drop resistance height of the sample is 0.4 m.

Without being limited by any theory, it is speculated that the crystalline phase structure, stress structure, and thickness of the chemically strengthened glass-ceramic are closely related to the damage resistance performance of the chemically strengthened glass-ceramic, especially to its resistance to penetration by sharp objects and resistance to drop damage on rough surfaces. However, how to well achieve the synergistic cooperation of the three in order to better improve the damage resistance performance of the chemically strengthened glass-ceramic requires further study. In the present disclosure, for chemically strengthened glass-ceramic at different thicknesses, by making the stress structure and the thickness of the chemically strengthened glass-ceramic having a specific crystalline phase structure satisfy specific relationship requirements, it is possible to enable the chemically strengthened glass-ceramic at different thicknesses to satisfy high strength performance requirements, and to ensure that the chemically strengthened glass-ceramic at different thicknesses has both excellent resistance performance to penetration by sharp objects and excellent resistance performance to drop damage on rough surfaces.

The chemically strengthened glass-ceramic provided in the present disclosure has a petalite crystalline phase and a lithium disilicate crystalline phase as the main crystalline phases, and the thickness and stress characteristics of the chemically strengthened glass-ceramic satisfy specific relationship requirements.

As described above, in some embodiments of the present disclosure, a chemically strengthened glass-ceramic is provided. The chemically strengthened glass-ceramic comprises a petalite crystalline phase and a lithium disilicate crystalline phase, wherein the petalite crystalline phase and the lithium disilicate crystalline phase have a higher mass percentage than other crystalline phases present in the chemically strengthened glass-ceramic;
the chemically strengthened glass-ceramic has a compressive stress layer on a surface thereof and has a tensile stress inside; the chemically strengthened glass-ceramic satisfies: $90 μm \leq DOL _ 0 ;$ $A = {T}^{1.5} \times {\int }_{0}^{80} CS \left(t\right) dt / 1000 ,$ a value of *A* is 5 to 15;
wherein *T* is a thickness of the chemically strengthened glass-ceramic, in mm; t is a depth from a main surface of the chemically strengthened glass-ceramic, *CS*(t) is a compressive stress value at depth t, ${\int }_{0}^{80} CS \left(t\right) dt$ is a compressive stress integral of the compressive stress layer from any main surface of the chemically strengthened glass-ceramic to a depth of 80 µm from the main surface, in MPa·µm; in formula *A*, data are substituted for calculation according to the above unit requirements, and a calculation result is obtained, wherein only numerical values are used in the calculation, with units being disregarded.

The lithium disilicate (Li₂Si₂O₅) crystalline phase is an orthorhombic crystal based on a [Si₂O₅] tetrahedral array, and the crystal shape is flat or plate-like. Petalite LiAlSi₄O₁₀ is a monoclinic crystal having a three-dimensional framework structure, including a layered structure with folded Si₂O₅ layers connected through Li and Al tetrahedra. For a glass-ceramic having petalite and lithium disilicate as main crystalline phases, the crystallinity can reach more than 70 wt%, and the presence of a large amount of microcrystalline phases in the glass-ceramic is beneficial for better preventing crack propagation and consuming more impact energy during the fracture process, thereby being beneficial for improving the strength and fracture toughness of the glass-ceramic. At the same time, the refractive index of lithium disilicate crystals is close to that of the glass matrix (e.g., the base glass for preparing the glass-ceramic in the present disclosure), and it is an ideal crystalline phase for preparing highly transparent glass-ceramics. Using petalite and lithium disilicate as the main crystalline phases is also beneficial for ensuring that the glass-ceramic maintains excellent optical performance. In addition, both the lithium disilicate crystalline phase and the petalite crystalline phase contain lithium ions that can participate in ion exchange, and they can be chemically strengthened in a molten salt bath. Na⁺ and/or K⁺ in the salt bath replace Li⁺ in the crystalline phase structure, which can form a surface stress structure, thereby being beneficial for further improving the mechanical strength performance of the glass-ceramic.

In the present disclosure, the chemically strengthened glass-ceramic contains the petalite crystalline phase and the lithium disilicate crystalline phase as the main crystalline phases, which is beneficial for obtaining a desired stress structure and ensuring its high intrinsic strength (or referred to as inherent strength), thereby ensuring that the chemically strengthened glass-ceramic achieves excellent damage resistance performance at an ultra-thin thickness.

In the present disclosure, when the value of the aforementioned formula *A* is too small, it is difficult for the chemically strengthened glass-ceramic to achieve both excellent resistance performance to penetration and excellent resistance performance to drop damage on rough surfaces, and when the value of formula *A* is too large, the chemically strengthened glass-ceramic either has a problem of excessive thickness or a problem of excessive internal stress leading to overall structural instability and poor safety, which greatly limits the application of the chemically strengthened glass-ceramic.

By making the chemically strengthened glass-ceramic satisfy specific crystalline phase structures and the requirements of formula *A*, the present disclosure not only ensures that the thickness of the chemically strengthened glass-ceramic satisfies the application requirements of different electronic devices, but also well achieves a synergistic cooperation among thickness, crystalline phase structure, and stress structure, thereby better improving the damage resistance performance of the chemically strengthened glass-ceramic, and in particular ensuring the obtainment of a chemically strengthened glass-ceramic product that has both excellent resistance performance to penetration by sharp objects and excellent resistance performance to drop damage on rough surfaces. In addition, the chemically strengthened glass-ceramic of the present disclosure also has excellent resistance performance to penetration by sharp objects and excellent resistance performance to drop damage on rough surfaces even when the thickness is relatively thin, which can reduce the probability of damage to electronic device screens, ensure the aesthetics of the screen, and thus meet the market demand for large-screen, light and thin electronic devices.

In some embodiments, the chemically strengthened glass-ceramic satisfies: DOL_0 may be 90 µm to 200 µm, 90 µm to 170 µm, 90 µm to 160 µm, 95 µm to 150 µm, 100 µm to 150 µm, 95 µm to 145 µm or 100 µm to 145 µm. In some embodiments, the chemically strengthened glass-ceramic satisfies: DOL_0 may be greater than or equal to 90 µm, greater than or equal to 95 µm, greater than or equal to 100 µm, greater than or equal to 105 µm, greater than or equal to 110 µm, greater than or equal to 115 µm or greater than or equal to 120 µm, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained. By making the chemically strengthened glass-ceramic have a suitable depth of the compressive stress layer DOL_0, it is possible to prevent sudden cracks generated when a blunt or sharp object impacts or penetrates from directly penetrating the compressive stress region to the tensile stress region, thereby causing the chemically strengthened glass-ceramic to shatter. This is more beneficial for improving the ability of the chemically strengthened glass-ceramic to offset the energy that drives crack propagation, thereby ensuring that the chemically strengthened glass-ceramic has excellent damage resistance performance, such as excellent resistance performance to penetration by sharp objects and excellent resistance performance to drop damage on rough surfaces.

In some embodiments, DOL_0 of the chemically strengthened glass-ceramic may be 90 µm, 95 µm, 100 µm, 105 µm, 113 µm, 115 µm, 111.48 µm, 110.32 µm, 113.85 µm, 114.65 µm, 113.82 µm, 124.84 µm, 116.25 µm, 129.90 µm, 114.26 µm, 136.58 µm, 115.54 µm, 144.85 µm, 109.58 µm, 108.86 µm, 98.00 µm, 120 µm, 125 µm, 130 µm, 140 µm, 150 µm, 160 µm or 170 µm, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained.

In some embodiments, the chemically strengthened glass-ceramic satisfies: the value of formula *A* may be 5 to 15, 6 to 14, 7 to 13, 8 to 12, 9 to 10, 5 to 10, or 10 to 15. In some embodiments, the chemically strengthened glass-ceramic satisfies: the value of formula *A* may be 5, 5.5, 6, 6.5, 7, 7.5, 8, 8.5, 9, 9.5, 10, 10.5, 11, 11.5, 12, 12.5, 13, 13.5, 14, 14.5, 7.635, 5.809, 9.060, 5.907, 5.426, 7.067, 6.609, 9.628, 5.999, 9.782, 6.541, 12.510, 6.503, 5.806, 5.430 or 15, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained.

In some embodiments of the present disclosure, the chemically strengthened glass-ceramic satisfies: $B = \left|CT_AV\right| \times DOL _ 0 \times \left(1000\times {T}^{2.8}-2\times DOL_0\times {T}^{1.8}\right) / 1000 ,$ a value of *B* is 550 to 3500;
wherein *T* is the thickness of the chemically strengthened glass-ceramic, in mm; |CT_AV| is an absolute value of an average tensile stress, in MPa; DOL_0 is a depth of the compressive stress layer, in µm; in formula *B*, data are substituted for calculation according to the above unit requirements, and a calculation result is obtained, wherein only numerical values are used in the calculation, with units being disregarded. By making the thickness and stress of the chemically strengthened glass-ceramic satisfy a specific relationship, it is beneficial to better improve the damage resistance performance of the chemically strengthened glass-ceramic.

In some embodiments, the chemically strengthened glass-ceramic satisfies: the value of formula *B* may be 800 to 3500, 900 to 3400, 1000 to 3300, 1200 to 3000, 1500 to 2800, 1800 to 2500, 800 to 2500, or 2500 to 3500. In some embodiments, the chemically strengthened glass-ceramic satisfies: the value of formula *B* may be 800, 850, 900, 950, 1000, 1050, 1100, 1150, 1200, 1250, 1300, 1350, 1400, 1450, 1500, 1550, 1600, 1650, 1700, 1750, 1800, 1850, 1900, 1950, 2000, 2050, 2100, 2150, 2200, 2250, 2300, 2350, 2400, 2450, 2500, 2550, 2600, 2650, 2700, 2750, 2800, 2850, 2900, 2950, 3000, 3050, 3100, 3150, 3200, 3250, 3300, 3350, 3400, 955.0, 877.3, 1175.9, 1043.3, 1209.0, 1320.5, 1398.7, 1989.5, 1621.4, 2339.9, 2340, 1729.7, 2879.3, 995.6, 895.9, 562.9, 3450 or 3500, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained.

In some embodiments of the present disclosure, the thickness of the chemically strengthened glass-ceramic *T* ≤ 1 mm, preferably, the thickness of the chemically strengthened glass-ceramic *T* is 0.3 mm to 1 mm, more preferably, the thickness of the chemically strengthened glass-ceramic *T* is 0.35 mm to 0.70 mm. Electronic devices often pursue lightness and thinness. When the thickness is too large, on the one hand, it increases weight, and on the other hand, it leads to poor optical effects, which is not conducive to achieving high transparency.

In some embodiments, the thickness of the chemically strengthened glass-ceramic *T* may be 0.30 mm to 1 mm, 0.30 mm to 0.9 mm, 0.30 mm to 0.8 mm, 0.35 mm to 0.7 mm, or 0.7 mm to 1.0 mm. In some embodiments, the thickness of the chemically strengthened glass-ceramic *T* may be 0.30 mm, 0.35 mm, 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 0.475 mm, 0.505 mm, 0.545 mm, 0.590 mm, 0.620 mm, 0.650 mm, 0.500 mm or 0.400 mm, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained.

In some embodiments of the present disclosure, the chemically strengthened glass-ceramic satisfies: $35000 MPa ⋅ μm \geq {\int }_{0}^{B 0} CS \left(t\right) dt \geq 10000 MPa ⋅ μm ,$ preferably, $30000 MPa ⋅ μm \geq {\int }_{0}^{B 0} CS \left(t\right) dt \geq 10000 MPa ⋅ μm ,$ more preferably, $30000 MPa ⋅ μm \geq {\int }_{0}^{B 0} CS \left(t\right) dt \geq 15000 MPa ⋅ μm .$ Without being limited by any theory, when the area enclosed by the compressive stress curve and the straight line y = 0, the straight line x = 0, and the straight line x = 80 µm is larger, the stress intensity value in the range from a compressive stress layer depth of 0 µm to a compressive stress layer depth of 80 µm is larger, indicating that their surface stress level is better, which is beneficial for ensuring that the chemically strengthened glass-ceramic achieves excellent resistance performance to penetration by sharp objects and excellent resistance performance to drop damage on rough surfaces.

In some embodiments, a value of ${\int }_{0}^{80} CS \left(t\right) dt$ may be 10000 MPa·µm to 35000 MPa·µm, 12000 MPa·µm to 32000 MPa·µm, 15000 MPa·µm to 30000 MPa·µm, 18000 MPa·µm to 28000 MPa·µm, 20000 MPa·µm to 25000 MPa·µm, 10000 MPa·µm to 15000 MPa·µm, 15000 MPa·µm to 35000 MPa·µm, or 15000 MPa·µm to 25000 MPa·µm. In some embodiments, the value of ${\int }_{0}^{80} CS \left(t\right) dt$ may be 10000 MPa·µm, 12000 MPa·µm, 14000 MPa·µm, 16000 MPa·µm, 18000 MPa·µm, 20000 MPa·µm, 22000 MPa·µm, 24000 MPa·µm, 26000 MPa. µm, 28000 MPa·µm, 30000 MPa·µm, 35000 MPa·µm, 23322.83 MPa·µm, 17745.62 MPa·µm, 25245.12 MPa·µm, 16459.20 MPa·µm, 13485.35 MPa·µm, 17564.52 MPa·µm, 14582.65 MPa·µm, 21245.19 MPa·µm, 12287.36 MPa·µm, 20036.85 MPa·µm, 12482.65 MPa·µm, 23872.85 MPa·µm, 18393.52 MPa·µm, 16421.45 MPa·µm or 21464.39 MPa·µm, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained.

In some embodiments of the present disclosure, the chemically strengthened glass-ceramic satisfies: 70 MPa ≤ |CT_AV| ≤ 160 MPa, preferably, 77 MPa ≤ |CT_AV| ≤ 160 MPa, more preferably, 110 MPa ≤ |CT_AV| ≤ 150 MPa, wherein |CT_AV| is the absolute value of the average tensile stress. By maintaining |CT_AV| of the chemically strengthened glass-ceramic at an appropriate level, it is beneficial to ensure that the chemically strengthened glass-ceramic has a desired tensile stress layer distribution structure, ensuring that it has a high surface stress level. The higher the surface compressive stress level, the more residual energy from dropping, squeezing, penetrating, impacting, or colliding can be offset, thereby ensuring that the chemically strengthened glass-ceramic has excellent damage resistance performance, such as excellent resistance performance to penetration by sharp objects and excellent resistance performance to drop damage on rough surfaces.

In some embodiments, |CT_AV| of the chemically strengthened glass-ceramic may be 70 MPa to 160 MPa, 80 MPa to 160 MPa, 90 MPa to 160 MPa, 100 MPa to 160 MPa, 77 MPa to 160 MPa, or 110 MPa to 150 MPa. In some embodiments, |CT_AV| of the chemically strengthened glass-ceramic may be 70 MPa, 80 MPa, 90 MPa, 100 MPa, 110 MPa, 129.8 MPa, 119.4 MPa, 127.4 MPa, 112.9 MPa, 99.8 MPa, 106.8 MPa, 87.0 MPa, 119.9 MPa, 85.7 MPa, 116.8 MPa, 77.6 MPa, 119.8 MPa, 112.66 MPa, 101.5 MPa, 146.5 MPa, 150 MPa, 155 MPa or 160 MPa, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained.

In some embodiments of the present disclosure, 0.17 ≤ DOL_0/T ≤ 0.25, preferably, 0.18 ≤ DOL_0/T ≤ 0.25. By making the ratio of the depth of the compressive stress layer to the thickness of the chemically strengthened glass-ceramic satisfy a suitable proportional relationship, it is beneficial to ensure that the chemically strengthened glass-ceramic is in a better stress distribution state, thereby being beneficial for facilitating the improvement of mechanical strength performance by the stress structure.

In some embodiments, a value of DOL_0/T of the chemically strengthened glass-ceramic may be 0.17, 0.18, 0.19, 0.2, 0.21, 0.22, 0.23, 0.24 or 0.25, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained.

In some embodiments of the present disclosure, the chemically strengthened glass-ceramic satisfies: 50000 MPa/mm ≤ CT_LD ≤ 80000 MPa/mm, preferably, 55000 MPa/mm ≤ CT_LD ≤ 80000 MPa/mm, more preferably, 61000 MPa/mm ≤ CT_LD ≤ 75000 MPa/mm, wherein CT_LD is a tensile stress linear density. By making CT_LD of the chemically strengthened glass-ceramic not less than 50000 MPa/mm, it is beneficial to ensure that the tensile stress stored inside the chemically strengthened glass-ceramic is sufficiently dense, thereby ensuring that it has a high surface stress level and ensuring that it obtains excellent damage resistance performance, such as excellent resistance performance to drop damage on rough surfaces, to meet market demand.

In some embodiments, CT_LD of the chemically strengthened glass-ceramic may be 50000 MPa/mm to 75000 MPa/mm, 58000 MPa/mm to 62000 MPa/mm, 55000 MPa/mm to 80000 MPa/mm, 56000 MPa/mm to 64000 MPa/mm, or 57000 MPa/mm to 63000 MPa/mm. In some embodiments, CT_LD of the chemically strengthened glass-ceramic may be 50000 MPa/mm, 55000 MPa/mm, 68873.25 MPa/mm, 63938.07 MPa/mm, 69956.48 MPa/mm, 61636.69 MPa/mm, 58114.73 MPa/mm, 57871.88 MPa/mm, 52716.10 MPa/mm, 67103.36 MPa/mm, 54112.64 MPa/mm, 65328.99 MPa/mm, 50012.60 MPa/mm, 66406.06 MPa/mm, 63278.87 MPa/mm, 57316.32 MPa/mm, 74715.00 MPa/mm, 75000 MPa/mm, 76000 MPa/mm, 77000 MPa/mm, 78000 MPa/mm, 79000 MPa/mm or 80000 MPa/mm, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained.

In some embodiments of the present disclosure, the chemically strengthened glass-ceramic satisfies: 30 MPa ≤ CS_80, wherein CS_80 refers to a compressive stress value at a depth of 80 µm from the main surface of the chemically strengthened glass-ceramic. In some embodiments, CS_80 of the chemically strengthened glass-ceramic may be 30 MPa, 35 MPa, 40 MPa, 45 MPa, 50 MPa, 55 MPa, 60 MPa, 69 MPa, 85 MPa, 114.7 MPa, 82.7 MPa, 118.7 MPa, 86.7 MPa, 68.7 MPa, 83.6 MPa, 69.5 MPa, 131.9 MPa, 77.5 MPa, 132.4 MPa, 62.1 MPa, 135.9 MPa, 91.26 MPa, 73.26 MPa, 59.5 MPa, 100 MPa, 110 MPa, 120 MPa, 130 MPa, 140 MPa or 150 MPa, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained.

It should be understood that the chemically strengthened glass-ceramic of the present disclosure can be prepared from a glass-ceramic by chemical strengthening treatment. Unless excessive ion exchange treatment is performed, the composition and phase assemblage of the portion deeper than the depth of the compressive stress layer (DOL) in the chemically strengthened glass-ceramic, such as the center or the tensile stress layer of the chemically strengthened glass-ceramic, are the same or substantially the same as the composition and phase assemblage of the glass-ceramic. Compared to the glass-ceramic before the chemical strengthening treatment, the composition at the surface of the glass-ceramic product after the chemical strengthening treatment may differ from the composition of the glass-ceramic before the ion exchange process. This is because during ion exchange, when the glass-ceramic is newly formed, one type of alkali metal ion (e.g., Li⁺ or Na⁺) at the surface of the glass-ceramic is replaced by a larger alkali metal ion (e.g., Na⁺ or K⁺), respectively. However, in embodiments, the glass composition and phase assemblage at or near the center of the depth or thickness of the glass-ceramic product will still have the composition and phase assemblage of the newly formed glass-ceramic. That is, in the present disclosure, the composition and phase assemblage at the center of the chemically strengthened glass-ceramic prepared by chemical strengthening treatment, or the composition and the phase assemblage of the tensile stress layer of the chemically strengthened glass-ceramic prepared by chemical strengthening treatment are the same or substantially the same as those of the glass-ceramic that has not been subjected to chemical strengthening treatment.

The glass-ceramic of the present disclosure can be prepared from a base glass by heat treatment. Based on mole percentage of oxides, the composition of the base glass is also the same or substantially the same as the composition of the glass-ceramic.

In some embodiments of the present disclosure, the composition of the base glass, or the composition of the glass-ceramic, or the composition at the center or of the tensile stress layer of the chemically strengthened glass-ceramic comprises: SiO₂: 64% to 70%, Al₂O₃: 3.5% to 5.0%, P₂O₅: 0.7% to 1.5%, ZrO₂: 1.5% to 3%, Na₂O: 0% to 3%, K₂O: 0% to 1%, Li₂O: 20% to 26%, CaO: 0% to 1.5%, B₂O₃: 0% to 2%, based on mole percentage of oxides. By satisfying a specific glass composition, it is beneficial to obtain a glass-ceramic that satisfies a specific crystalline phase structure, and it is beneficial to obtain a chemically strengthened glass-ceramic that satisfies a specific stress structure. It should be understood that in specific embodiments, any of the above ranges may be combined with any other ranges, as long as a chemically strengthened glass-ceramic having the desired performance of the present disclosure can be obtained.

In the present disclosure, SiO₂ is an oxide that forms the glass network skeleton, used to stabilize the network structure of the base glass, and is also an important component constituting the lithium disilicate crystalline phase and the petalite crystalline phase. When the glass composition contains a sufficiently high content of SiO₂, it is beneficial to form a sufficient amount of petalite crystals and lithium disilicate crystals. However, if the SiO₂ content is too high, it will not only deteriorate the meltability of the glass, increase the viscosity of the molten glass melt, make the glass melt difficult to fine, and increase the difficulty of forming the base glass, but also lengthen the heat treatment time when preparing the glass-ceramic from the base glass. Therefore, in order to satisfy the glass formability requirements and achieve the desired crystallization effect of the present disclosure, the mole percentage content of SiO₂ is 64% to 70%, preferably 64% to 69.5%, more preferably 67.5% to 69.5% in the present disclosure.

In some embodiments, based on mole percentage of oxides, the mole percentage of SiO₂ in the composition of the base glass, or the composition of the glass-ceramic, or the composition at the center or of the tensile stress layer of the chemically strengthened glass-ceramic may be 64%, 65%, 66%, 67%, 68%, 69%, 69.5%, 70%, 68.02%, 64.39% or 68.74%, or may be a value within a numerical range constituted by any two of the above specific values as endpoints, as long as a glass-ceramic or chemically strengthened glass-ceramic having the desired performance of the present disclosure can be obtained. It should be understood that in specific embodiments, any of the above ranges may be combined with any other ranges, as long as a glass-ceramic or chemically strengthened glass-ceramic having the desired performance of the present disclosure can be obtained.

In the present disclosure, Al₂O₃ can be used to build the glass skeleton and is an indispensable component for the formation of petalite. An appropriate amount of Al₂O₃ can stabilize the glass network structure, which is beneficial for improving mechanical performance, chemical durability, and chemical strengthening effect, inhibiting glass phase separation, reducing the thermal expansion coefficient, and increasing the strain point. If the Al₂O₃ content is too low, the glass tends to have a higher thermal expansion coefficient, its chemical durability decreases, and the crystal nuclei become larger, making the glass-ceramic prone to white turbidity; if the Al₂O₃ content is too high, the meltability of the glass deteriorates, making production difficult, and crystals such as mullite are prone to precipitate, causing devitrification of the glass. Therefore, in order to satisfy the desired crystalline phase structure and make the glass-ceramic or chemically strengthened glass-ceramic obtain the desired performance, the mole percentage content of Al₂O₃ is 3.5% to 5.0%, preferably 4% to 4.8%, more preferably 4% to 4.5% in the present disclosure.

In some embodiments, based on mole percentage of oxides, the mole percentage of Al₂O₃ in the composition of the base glass, or the composition of the glass-ceramic, or the composition at the center or of the tensile stress layer of the chemically strengthened glass-ceramic may be 3.5%, 3.6%, 3.7%, 3.8%, 3.9%, 4%, 4.1%, 4.2%, 4.4%, 4.5%, 4.8%, 5.0%, 4.30%, 4.07% or 4.41%, or may be a value within a numerical range constituted by any two of the above specific values as endpoints, as long as a glass-ceramic or chemically strengthened glass-ceramic having the desired performance of the present disclosure can be obtained. It should be understood that in specific embodiments, any of the above ranges may be combined with any other ranges, as long as a glass-ceramic or chemically strengthened glass-ceramic having the desired performance of the present disclosure can be obtained.

In the present disclosure, P₂O₅ is a glass-forming oxide, which exists in the network structure as a phosphorus-oxygen tetrahedron [PO₄]. P₂O₅ appears first during the heat treatment, first causing the glass to phase separate and cluster, forming an amorphous precursor phase Li₃PO₄, and then Li₃PO₄ acts as a heterogeneous nucleation point for the growth of crystalline phases such as lithium silicate, which grows attached to the amorphous Li₃PO₄. As the P₂O₅ content increases, the number of heterogeneous nucleation points increases, and the crystal grains nucleated with Li₃PO₄ as nucleation points are effectively refined, which is beneficial for improving the overall transmittance, glass uniformity, and reducing the b-value of the glass-ceramic. However, when the P₂O₅ content is too high, excessive Li₃PO₄ crystals are easily formed, resulting in insufficient Li₂O content for forming lithium silicate and petalite, which in turn makes the base glass prone to precipitation of quartz crystals, causing a decrease in the transmittance of the glass-ceramic and a decrease in the overall optical uniformity of the glass-ceramic. When the P₂O₅ content is too low, the size of the precipitated crystals is too large, making the glass prone to devitrification. Therefore, in order to achieve the desired crystallization effect of the present disclosure and obtain the desired performance of the glass-ceramic or chemically strengthened glass-ceramic, the mole percentage content of P₂O₅ is 0.7% to 1.5%, preferably 0.8% to 1.5%, more preferably 0.8% to 1.2%.

In some embodiments, based on mole percentage of oxides, the mole percentage of P₂O₅ in the composition of the base glass, or the composition of the glass-ceramic, or the composition at the center or of the tensile stress layer of the chemically strengthened glass-ceramic may be 0.7%, 0.8%, 0.9%, 1%, 1.1%, 1.2%, 1.3%, 1.4%, 1.5%, 1.17%, 1.14% or 0.95%, or may be a value within a numerical range constituted by any two of the above specific values as endpoints, as long as a glass-ceramic or chemically strengthened glass-ceramic having the desired performance of the present disclosure can be obtained. It should be understood that in specific embodiments, any of the above ranges may be combined with any other ranges, as long as a glass-ceramic or chemically strengthened glass-ceramic having the desired performance of the present disclosure can be obtained.

In the present disclosure, an appropriate amount of ZrO₂ can increase the viscosity, elastic modulus, refractive index, chemical stability, and reduce the thermal expansion coefficient of the glass. After heat treatment, ZrO₂ exists in the residual glass phase, which is beneficial for improving the mechanical strength performance of the residual glass phase. However, an excessive amount of ZrO₂ increases the difficulty of melting the base glass, causing crystallization during the melting process of the base glass. Therefore, in order to satisfy the glass formability requirements and achieve the desired strength effect of the present disclosure, the mole percentage content of ZrO₂ is 1.5% to 3%, preferably 2.5% to 3%, more preferably 2.6% to 3%.

In some embodiments, based on mole percentage of oxides, the mole percentage of ZrO₂ in the composition of the base glass, or the composition of the glass-ceramic, or the composition at the center or of the tensile stress layer of the chemically strengthened glass-ceramic may be 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 2.88%, 2.98% or 2.89%, or may be a value within a numerical range constituted by any two of the above specific values as endpoints, as long as a glass-ceramic or chemically strengthened glass-ceramic having the desired performance of the present disclosure can be obtained. It should be understood that in specific embodiments, any of the above ranges may be combined with any other ranges, as long as a glass-ceramic or chemically strengthened glass-ceramic having the desired performance of the present disclosure can be obtained.

In the present disclosure, Na₂O is a network-modifying oxide, which can provide free oxygen. An appropriate amount of Na₂O is beneficial for improving the viscosity of the glass and promoting the melting and fining of the glass melt, and is also beneficial for promoting the precipitation of the lithium disilicate crystalline phase, reducing the crystallization tendency of the glass, and increasing the transmittance of the glass. However, an excessive amount of Na₂O will affect the network structure of the glass, thereby affecting the strength performance of the glass-ceramic. Therefore, in order to ensure that the glass-ceramic or chemically strengthened glass-ceramic satisfies the desired structure and obtains the desired performance, the mole percentage content of Na₂O is 0% to 3%, preferably 0% to 2%, more preferably 0% to 1%.

In some embodiments, based on mole percentage of oxides, the mole percentage of Na₂O in the composition of the base glass, or the composition of the glass-ceramic, or the composition at the center or of the tensile stress layer of the chemically strengthened glass-ceramic may be 0%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 0.15% or 0.78%, or may be a value within a numerical range constituted by any two of the above specific values as endpoints, as long as a glass-ceramic or chemically strengthened glass-ceramic having the desired performance of the present disclosure can be obtained. It should be understood that in specific embodiments, any of the above ranges may be combined with any other ranges, as long as a glass-ceramic or chemically strengthened glass-ceramic having the desired performance of the present disclosure can be obtained.

In the present disclosure, K₂O is a glass network-modifying oxide. An appropriate amount of K₂O can reduce the crystallization tendency of the glass and increase the transparency and gloss of the glass. However, when the K₂O content is too high, the crystallization ability of the glass becomes strong, the glass is prone to devitrification, and the glass-ceramic is prone to breakage. Therefore, in order to ensure that the glass-ceramic or chemically strengthened glass-ceramic satisfies the desired structure and obtains the desired performance, the mole percentage content of K₂O is 0% to 1%, preferably 0% to 0.5%, more preferably 0% to 0.3%.

In some embodiments, based on mole percentage of oxides, the mole percentage of K₂O in the composition of the base glass, or the composition of the glass-ceramic, or the composition at the center or of the tensile stress layer of the chemically strengthened glass-ceramic may be 0%, 0.1%, 0.2%, 0.3%, 0.4%, 0.5%, 0.6%, 0.7%, 0.8%, 0.9%, 1% or 0.07%, or may be a value within a numerical range constituted by any two of the above specific values as endpoints, as long as a glass-ceramic or chemically strengthened glass-ceramic having the desired performance of the present disclosure can be obtained. It should be understood that in specific embodiments, any of the above ranges may be combined with any other ranges, as long as a glass-ceramic or chemically strengthened glass-ceramic having the desired performance of the present disclosure can be obtained.

In the present disclosure, Li₂O is a main component of the petalite crystalline phase and the lithium disilicate crystalline phase, and is also an essential component for achieving chemical strengthening. An appropriate amount of Li₂O is beneficial for ensuring that the glass-ceramic satisfies all requirements for the transparency, melt forming effect, crystallization ability, chemical strengthening performance, etc. When the Li₂O content is too low, it is easy to cause the glass to precipitate impurity crystalline phases, such as mullite, causing devitrification of the glass, and also easy to reduce the meltability of the glass or increase the viscosity, making the forming of the base glass difficult; when the Li₂O content is too high, it is easy to affect the network structure of the glass, and also easy to make the crystallization ability of the glass too strong, increasing the devitrification tendency of the glass. Therefore, in order to obtain a glass-ceramic or chemically strengthened glass-ceramic having the desired crystalline phase structure, optical performance, and mechanical strength performance, the mole percentage content of Li₂O is 20% to 26%, preferably 20.5% to 25%, more preferably 20.5% to 23.5%.

In some embodiments, based on mole percentage of oxides, the mole percentage of Li₂O in the composition of the base glass, or the composition of the glass-ceramic, or the composition at the center or of the tensile stress layer of the chemically strengthened glass-ceramic may be 20%, 20.5%, 21%, 21.5%, 22%, 22.5%, 23%, 23.5%, 24%, 24.5%, 25%, 25.5%, 26%, 22.40%, 25.68% or 21.48%, or may be a value within a numerical range constituted by any two of the above specific values as endpoints, as long as a glass-ceramic or chemically strengthened glass-ceramic having the desired performance of the present disclosure can be obtained. It should be understood that in specific embodiments, any of the above ranges may be combined with any other ranges, as long as a glass-ceramic or chemically strengthened glass-ceramic having the desired performance of the present disclosure can be obtained.

In the present disclosure, CaO can reduce the high-temperature viscosity, which is beneficial for glass forming, and at the same time, enhance the network structure, so that the stress benefit of the glass-ceramic during the strengthening process is enhanced. When the CaO content is too high, excessive CaO remains in the glass phase, producing a refractive index difference with the main crystalline phase, which will cause a decrease in the transmittance of the glass-ceramic and an increase in haze. Therefore, in order to obtain a glass-ceramic or chemically strengthened glass-ceramic having the desired optical performance and mechanical strength performance, the mole percentage content of CaO is 0% to 1.5%, preferably 0% to 1%, more preferably 0.5% to 1%.

In some embodiments, based on mole percentage of oxides, the mole percentage of CaO in the composition of the base glass, or the composition of the glass-ceramic, or the composition at the center or of the tensile stress layer of the chemically strengthened glass-ceramic may be 0%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 0.89%, 0.93% or 0.73%, or may be a value within a numerical range constituted by any two of the above specific values as endpoints, as long as a glass-ceramic or chemically strengthened glass-ceramic having the desired performance of the present disclosure can be obtained. It should be understood that in specific embodiments, any of the above ranges may be combined with any other ranges, as long as a glass-ceramic or chemically strengthened glass-ceramic having the desired performance of the present disclosure can be obtained.

In the present disclosure, B₂O₃ helps to reduce the melting temperature of the base glass, and improve the transmittance, overall uniformity, and other performances of the glass-ceramic. However, when the amount of B₂O₃ added is too high, the stress of the chemically strengthened glass-ceramic will decrease, and at the same time, the increase in B₂O₃ content in the residual glass phase will reduce the viscosity of the residual glass phase, promote the growth of crystals such as lithium metasilicate, etc., and affect the optical transmittance of the glass-ceramic. Therefore, in order to obtain a glass-ceramic or chemically strengthened glass-ceramic having the desired optical performance and mechanical strength performance, the mole percentage content of B₂O₃ is 0% to 2%, preferably 0% to 1%, more preferably 0% to 0.8%.

In some embodiments, based on mole percentage of oxides, the mole percentage of B₂O₃ in the composition of the base glass, or the composition of the glass-ceramic, or the composition at the center or of the tensile stress layer of the chemically strengthened glass-ceramic may be 0%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 0.08% or 0.8%, or may be a value within a numerical range constituted by any two of the above specific values as endpoints, as long as a glass-ceramic or chemically strengthened glass-ceramic having the desired performance of the present disclosure can be obtained. It should be understood that in specific embodiments, any of the above ranges may be combined with any other ranges, as long as a glass-ceramic or chemically strengthened glass-ceramic having the desired performance of the present disclosure can be obtained.

In some embodiments of the present disclosure, in the composition of the base glass, or the composition of the glass-ceramic, or the composition at the center or of the tensile stress layer of the chemically strengthened glass-ceramic, the mole percentage of ZrO2 [ZrO₂], the mole percentage of CaO [CaO], the mole percentage of P₂O₅ [P₂O₅], the mole percentage of Na₂O [Na₂O], the mole percentage of K₂O [K₂O], and the mole percentage of B₂O₃ [B₂O₃] satisfy the following relationship:
3.5% ≤ ([ZrO₂] + [CaO] + [P₂O₅])/EXP([Na₂O] + [K₂O] + [B₂O₃]) ≤ 5.5%, preferably, 4.5% ≤ ([ZrO₂] + [CaO] + [P₂O₅])/EXP([Na₂O] + [K₂O] + [B₂O₃]) ≤ 5.3%. It should be noted that in the present disclosure, for the content relationship of each oxide, the content percentage based on oxide mole is substituted into each formula, wherein only numerical values are used in the calculation, with mole units being disregarded. By adjusting the content of each oxide to satisfy a specific content relationship, it is beneficial to obtain a glass-ceramic or chemically strengthened glass-ceramic having the desired mechanical strength performance.

In some embodiments, a value of ([ZrO₂] + [CaO] + [P₂O₅])/EXP([Na₂O] + [K₂O] + [B₂O₃]) may be 3.5%, 4.0%, 4.5%, 4.6%, 4.7%, 4.8%, 4.9%, 5%, 5.1%, 5.2%, 5.3%, 5.4%, 5.5%, 4.97% or 4.53%, or may be a value within a numerical range constituted by any two of the above specific values as endpoints, as long as a glass-ceramic or chemically strengthened glass-ceramic having the desired performance of the present disclosure can be obtained. It should be understood that in specific embodiments, any of the above ranges may be combined with any other ranges, as long as a glass-ceramic or chemically strengthened glass-ceramic having the desired performance of the present disclosure can be obtained.

In some embodiments of the present disclosure, in the composition of the base glass, or the composition of the glass-ceramic, or the composition at the center or of the tensile stress layer of the chemically strengthened glass-ceramic, the mole percentage of P₂O₅ [P₂O₅] and the mole percentage of Al₂O₃ [Al₂O₃] satisfy the following relationship:
5% ≤ [P₂O₅] + [Al₂O₃] ≤ 6%, preferably, 5.0% ≤ [P₂O₅] + [Al₂O₃] ≤ 5.6%. By adjusting the contents of P₂O₅ and Al₂O₃ to satisfy a specific range, it is beneficial to obtain a glass-ceramic or chemically strengthened glass-ceramic having the desired crystalline phase structure and stress structure.

In some embodiments, a value of [P₂O₅] + [Al₂O₃] may be 5%, 5.1%, 5.2%, 5.3%, 5.4%, 5.5%, 5.6%, 5.7%, 5.8%, 5.9%, 6%, 5.21%, 5.47% or 5.36%, or may be a value within a numerical range constituted by any two of the above specific values as endpoints, as long as a glass-ceramic or chemically strengthened glass-ceramic having the desired performance of the present disclosure can be obtained. It should be understood that in specific embodiments, any of the above ranges may be combined with any other ranges, as long as a glass-ceramic or chemically strengthened glass-ceramic having the desired performance of the present disclosure can be obtained.

In some embodiments of the present disclosure, in the composition of the base glass, or the composition of the glass-ceramic, or the composition at the center or of the tensile stress layer of the chemically strengthened glass-ceramic, the mole percentage of B₂O₃ [B₂O₃], the mole percentage of Al₂O₃ [Al₂O₃], and the mole percentage of SiO₂ [SiO₂] satisfy the following relationship:
15 ≤ ([SiO₂] + 2 × [B₂O₃])/[Al₂O₃] ≤ 17, preferably, 15.0 ≤ ([SiO₂] + 2 × [B₂O₃])/[Al₂O₃] ≤ 16.5. By adjusting the contents of SiO₂, B₂O₃, and Al₂O₃ to satisfy a specific range, it is beneficial to obtain a glass-ceramic or chemically strengthened glass-ceramic having the desired intrinsic strength and stress structure.

In some embodiments, a value of ([SiO₂] + 2 × [B₂O₃])/[Al₂O₃] may be 15, 15.1, 15.2, 15.3, 15.4, 15.5, 15.6, 15.7, 15.8, 15.9, 16, 16.5, 17, 15.86, 15.82 or 15.95, or may be a value within a numerical range constituted by any two of the above specific values as endpoints, as long as a glass-ceramic or chemically strengthened glass-ceramic having the desired performance of the present disclosure can be obtained. It should be understood that in specific embodiments, any of the above ranges may be combined with any other ranges, as long as a glass-ceramic or chemically strengthened glass-ceramic having the desired performance of the present disclosure can be obtained.

In the present disclosure, "the petalite crystalline phase and the lithium disilicate crystalline phase have a higher mass percentage than other crystalline phases present in the chemically strengthened glass-ceramic" or "using petalite and lithium disilicate as the main crystalline phases" or other similar expressions means that a sum of masses of the petalite crystalline phase and the lithium disilicate crystalline phase accounts for in total more than 80% by weight (wt%) of all crystalline phases of the chemically strengthened glass-ceramic according to the embodiments of the present disclosure. In some embodiments of the present disclosure, in the chemically strengthened glass-ceramic, the sum of the masses of the petalite crystalline phase and the lithium disilicate crystalline phase accounts for 80 wt% to 100 wt% of all crystalline phases of the chemically strengthened glass-ceramic, preferably, in all crystalline phases of the chemically strengthened glass-ceramic, the sum of the masses of the petalite crystalline phase and the lithium disilicate crystalline phase accounts for 85 wt% to 100 wt% of all crystalline phases. In some embodiments, in all crystalline phases of the chemically strengthened glass-ceramic, the sum of the mass percentages of the petalite crystalline phase and the lithium disilicate crystalline phase may be 80 wt%, 80.5 wt%, 81 wt%, 81.5 wt%, 82 wt%, 82.5 wt%, 83 wt%, 83.5 wt%, 84 wt%, 84.5 wt%, 85 wt%, 85.5 wt%, 86 wt%, 86.5 wt%, 87 wt%, 87.5 wt%, 88 wt%, 88.5 wt%, 89 wt%, 89.5 wt%, 90 wt%, 95 wt% or 100 wt%, or may be a value within a numerical range constituted by any two of the above specific values as endpoints, as long as a glass-ceramic or chemically strengthened glass-ceramic having the desired performance of the present disclosure can be obtained. It should be understood that in specific embodiments, any of the above ranges may be combined with any other ranges, as long as a glass-ceramic or chemically strengthened glass-ceramic having the desired performance of the present disclosure can be obtained.

In some embodiments of the present disclosure, in the chemically strengthened glass-ceramic, an average grain size does not exceed 100 nm, preferably, the average grain size does not exceed 50 nm, more preferably, the average grain size is 15 nm to 30 nm. An appropriate average grain size is beneficial for making the glass-ceramic have both excellent optical performance and high intrinsic strength. If the average grain size is too high, the glass-ceramic is prone to devitrification, and the chemical strengthening effect is also affected. In the present disclosure, by making the chemically strengthened glass-ceramic have an appropriate average grain size, it is beneficial to ensure that the chemically strengthened glass-ceramic achieves excellent mechanical strength performance and excellent optical performance.

In some embodiments, the average grain size of the chemically strengthened glass-ceramic may be 100 nm, 50 nm, 40 nm, 35 nm, 30 nm, 25 nm, 20 nm, 15 nm, 19.7 nm, 18.6 nm, 20.8 nm, 20.3 nm, 25.2 nm, 23.2 nm, 22.6 nm or 10 nm, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained.

In some embodiments of the present disclosure, a crystallinity of the chemically strengthened glass-ceramic is not less than 70%, preferably, the crystallinity of the chemically strengthened glass-ceramic is 80% to 90%, more preferably, the crystallinity of the chemically strengthened glass-ceramic is 85% to 90%. It should be understood that in the present disclosure, after the glass-ceramic is subjected to chemical strengthening treatment to obtain a chemically strengthened glass-ceramic, its crystallinity does not change significantly; that is, the crystallinity of the glass-ceramic is the same or substantially the same as the crystallinity of the chemically strengthened glass-ceramic. The higher the crystallinity of the glass-ceramic, the more beneficial it is for obtaining high mechanical strength performance and high damage resistance performance. However, if the crystallinity is too high, it is easy to affect the chemical strengthening effect of the glass-ceramic, leading to a longer chemical strengthening time for preparing a chemically strengthened glass-ceramic with a high stress level, and also easy to affect the optical performance of the glass-ceramic. In the present disclosure, by making the glass-ceramic satisfy the desired crystallinity, it is beneficial to make the chemically strengthened glass-ceramic prepared therefrom also satisfy the desired crystallinity, and it is more beneficial to obtain a chemically strengthened glass-ceramic having the desired high mechanical strength performance, high damage resistance performance, and excellent optical performance.

In some embodiments, the crystallinity of the chemically strengthened glass-ceramic may be 70%, 80%, 81%, 82%, 83%, 84%, 85%, 86%, 87%, 88%, 89%, 86.2%, 88.6%, 87.5%, 87.2%, 86.5% or 90%, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained.

In some embodiments of the present disclosure, a Young's modulus of the chemically strengthened glass-ceramic is greater than 100 GPa, preferably, the Young's modulus is greater than 105 GPa, more preferably, the Young's modulus is 110 GPa to 120 GPa. It should be understood that in the present disclosure, after the glass-ceramic is subjected to chemical strengthening treatment to obtain a chemically strengthened glass-ceramic, its Young's modulus does not decrease, that is, when the Young's modulus of the glass-ceramic is greater than 100 GPa, the Young's modulus of the chemically strengthened glass-ceramic prepared therefrom should also be greater than 100 GPa. A higher Young's modulus is beneficial for ensuring that the chemically strengthened glass-ceramic has high mechanical strength performance and high damage resistance performance.

In some embodiments, the Young's modulus of the chemically strengthened glass-ceramic may be 101 GPa, 102 GPa, 103 GPa, 104 GPa, 105 GPa, 106 GPa, 107 GPa, 108 GPa, 109 GPa, 110 GPa, 111 GPa, 112 GPa, 113 GPa, 114 GPa, 115 GPa, 115.25 GPa, 115.07 GPa, 112.04 GPa, 116 GPa, 117 GPa, 118 GPa, 119 GPa or 120 GPa, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained.

In some embodiments of the present disclosure, when the thickness of the chemically strengthened glass-ceramic is 0.3 mm to 1 mm, a b-value of the chemically strengthened glass-ceramic is < 1.0, preferably, the b-value is < 0.70, more preferably, the b-value is ≤ 0.60. It should be understood that in the present disclosure, after the glass-ceramic is subjected to chemical strengthening treatment to obtain a chemically strengthened glass-ceramic, its optical performance does not change significantly; that is, the b-value, transmittance, and others of the glass-ceramic are the same or substantially the same as those of the chemically strengthened glass-ceramic. In the present disclosure, the b-value refers to the optical b-value measured under a D65 light source. In the present disclosure, a Konica Minolta CM-3600A was used to test the b-value in transmittance mode, and the result shows b (D65). The smaller the b-value, the more it can ensure that the glass-ceramic achieves a better display effect. When the b-value is too large, the glass-ceramic will have an undesirable color, making its display effect unable to satisfy the application requirements of a display screen cover glass.

In some embodiments, when the thickness of the chemically strengthened glass-ceramic is 0.3 mm to 1 mm, the b-value of the chemically strengthened glass-ceramic may be 0.70, 0.65, 0.60, 0.55, 0.50, 0.45, 0.40, 0.35, 0.30, 0.25, 0.32, 0.34, 0.37, 0.44, 0.26, 0.39, 0.49, 0.47, 0.59, 0.48, 0.52 or 0.20, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained.

In some embodiments of the present disclosure, the chemically strengthened glass-ceramic is transparent in a visible light wavelength range, preferably, for light with a wavelength of 550 nm, a transmittance of the chemically strengthened glass-ceramic with the thickness ranging from 0.3 mm to 1 mm is ≥ 85%, preferably, the transmittance is ≥ 90%, more preferably, the transmittance is ≥ 90.29%. A chemically strengthened glass-ceramic satisfying such a transmittance can ensure good light transmittance and a good transparency effect, and is suitable for use in a display screen where a display effect is required. Here, the "visible light wavelength range" refers to light with a wavelength of 360 nm to 740 nm.

In some embodiments, for light with a wavelength of 550 nm, the transmittance of the chemically strengthened glass-ceramic with the thickness ranging from 0.3 mm to 1 mm may be 85%, 90%, 90.10%, 90.20%, 90.29%, 90.30%, 90.40%, 90.50%, 91.00%, 91.04%, 91.05%, 91.08%, 91.14%, 90.69%, 90.81%, 90.86%, 90.77%, 90.98%, 90.90%, 90.42% or 92.00%, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained.

In some embodiments of the present disclosure, on a compressive stress curve of the chemically strengthened glass-ceramic, an absolute value of slope at a depth of 80 µm |K_{80µm}| satisfies 2.5 MPa/µm ≤ |K_{80µm}| ≤ 4.5 MPa/µm, preferably 3.0 MPa/µm ≤ |K_{80µm}| ≤ 4.5 MPa/µm.

In some embodiments, on the compressive stress curve of the chemically strengthened glass-ceramic, the absolute value of the slope at the depth of 80 µm |K_{80µm}| may be: 2.5 MPa/µm, 2.6 MPa/µm, 2.7 MPa/µm, 2.8 MPa/µm, 2.9 MPa/µm, 3.0 MPa/µm, 3.1 MPa/µm, 3.2 MPa/µm, 3.3 MPa/µm, 3.4 MPa/µm, 3.5 MPa/µm, 3.6 MPa/µm, 3.7 MPa/µm, 3.8 MPa/µm, 3.9 MPa/µm, 4.0 MPa/µm, 4.1 MPa/µm, 4.2 MPa/µm, 4.3 MPa/µm, 4.4 MPa/µm, 3.21 MPa/µm, 2.55 MPa/µm, 4.05 MPa/µm, 3.05 MPa/µm, 2.85 MPa/µm, 2.81 MPa/µm, 3.17 MPa/µm, 3.10 MPa/µm, 3.55 MPa/µm, 3.85 MPa/µm, 3.26 MPa/µm, 3.38 MPa/µm, 2.57 MPa/µm, 3.78 MPa/µm or 4.5 MPa/µm, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained.

In some embodiments of the present disclosure, when using a Mohs hardness pen with a Mohs hardness rating of 6 and a pen tip presenting an angle of 35° in horizontal projection, and subjecting the pen tip of the Mohs hardness pen to vertically penetrate into the chemically strengthened glass-ceramic with the thickness not less than 0.35 mm along the thickness direction, and when a penetration depth is 80 µm, a required applied load F_{80µm} is ≥ 100 N, preferably, the required applied load F80_{µm} is ≥ 110 N. In some embodiments, when the penetration depth is 80 µm, the required applied load F_{80µm} may be 100 N, 105 N, 110 N, 115 N, 120 N, 125 N, 130 N, 140 N, 145 N, 150 N, 123.5 N, 110.6 N, 131.9 N, 114.4 N, 106.5 N, 125.5 N, 125.6 N, 138.6 N, 113.8 N, 137.5 N, 117.5 N, 144.8 N, 121.5 N, 103.3 N or 102.7 N, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained.

In some embodiments of the present disclosure, when subjecting the chemically strengthened glass-ceramic with the thickness not less than 0.35 mm to a sandpaper drop resistance test and using an 80-mesh sandpaper, an average drop height in the sandpaper drop resistance test of the chemically strengthened glass-ceramic is ≥ 0.8 m, preferably, the average drop height in the sandpaper drop resistance test of the chemically strengthened glass-ceramic is ≥ 1.0 m. In some embodiments, when the chemically strengthened glass-ceramic with the thickness not less than 0.35 mm is dropped on 80-mesh sandpaper, the average drop height in the sandpaper drop resistance test may be 0.8 m, 0.9 m, 1.0 m, 1.08 m, 1.1 m, 1.11 m, 1.12 m, 1.13 m, 1.14 m, 1.15 m, 1.16 m, 1.17 m, 1.18 m, 1.19 m, 1.2 m, 1.25 m, 1.26 m, 1.3 m, 1.32 m, 1.35 m, 1.4 m, 1.45 m, 1.5 m, 1.55 m, 1.6 m, 1.65 m, 1.68 m, 1.7 m, 1.75 m, 1.8 m, 1.85 m, 1.9 m, 1.95 m or 2 m, or may be a value within a numerical range constituted by any two of the above specific values as endpoints, as long as a chemically strengthened glass-ceramic having the desired performance of the present disclosure can be obtained. It should be understood that in specific embodiments, any of the above ranges may be combined with any other ranges, as long as a chemically strengthened glass-ceramic having the desired performance of the present disclosure can be obtained.

After introducing the chemically strengthened glass-ceramic regarding composition, crystalline phase structure, stress structure, etc., the preparation method of the chemically strengthened glass-ceramic is specifically described below.

In the present disclosure, the preparation process of the chemically strengthened glass-ceramic mainly includes: a preparation process of a glass-ceramic and a chemical strengthening treatment process; and the preparation process of the glass-ceramic mainly includes: a preparation process of a base glass and a heat treatment process of the base glass (forming a crystalline phase in the base glass by heat treatment, i.e., a process of preparing a glass-ceramic).

In the present disclosure, a forming method in the prior art can be used to prepare the base glass, and the present disclosure has no limitation on this. For example, the forming method of the base glass may include, but is not limited to, a float method, an overflow method, a rolling method, or a casting process. Exemplarily, each component is uniformly mixed according to the formulation, melted and formed, and then cooled and annealed to obtain a base glass.

Exemplarily, various raw materials (conventional industrial raw materials) are formulated according to the formulation ratio, a fining agent is added, and then the mixture is mixed for a period of time to obtain a uniformly mixed raw material mixture. The raw material mixture is placed in a platinum crucible or a melting furnace, heated to 1550°C to 1650°C, preferably kept at the melting temperature for 5 hours or more, and then poured into a forming mold to be cooled and formed, preferably cooled to about 900°C, and then placed in an annealing furnace for annealing treatment, preferably at an annealing temperature of 450°C to 500°C, preferably for 12 hours to 48 hours, and then cooled to room temperature with the furnace to obtain a base glass. Those skilled in the art can select the type and amount of fining agent according to requirements without creative efforts. Further, the fining agent may include, but is not limited to, one or more selected from the group consisting of sodium chloride, tin oxide, antimony oxide, or arsenic oxide, and the amount of the fining agent added may be 0 wt% to 1 wt% of the total amount of the raw materials.

In some embodiments of the present disclosure, the heat treatment process of the base glass may include a nucleation treatment and/or a crystallization treatment, preferably a nucleation treatment and a crystallization treatment. In some embodiments, the crystallization treatment includes a one-step crystallization treatment or a two-step crystallization treatment. In some embodiments, in order to prepare a curved glass-ceramic, a two-step crystallization treatment may be used. When a two-step crystallization treatment is used, the second step of the crystallization treatment is to heat the crystallized glass raw material obtained from the first step of the crystallization treatment to a crystallization temperature and perform a 3D hot bending forming treatment.

In some embodiments of the present disclosure, in order to obtain the desired physicochemical properties of the glass-ceramic, when performing heat treatment on the base glass, a one-step heat treatment or a two-step or multi-step heat treatment may be used. If a one-step heat treatment is used, it means that the nucleation treatment (i.e., the treatment of nucleating) is not performed separately, and the temperature is directly raised in one step to carry out both nucleation and target crystal growth at the temperature reached in the one-step temperature increase, which can be understood as directly performing a crystallization treatment. If a two-step heat treatment is used, it means that a two-step temperature increase process is performed, first performing a nucleation treatment, i.e., a treatment of nucleating, and then performing a target crystal growth treatment, i.e., a crystallization treatment.

In some embodiments of the present disclosure, in order to precipitate the desired target crystalline phases in the glass-ceramic and obtain the desired physicochemical properties, the base glass is sequentially subjected to a nucleation treatment and a crystallization treatment. Further, during the nucleation treatment, the nucleation temperature may be 500°C to 700°C, and the nucleation time may be 10 min to 1440 min; during the crystallization treatment, the crystallization temperature may be 600°C to 750°C, and the crystallization time may be 5 min to 1440 min. During the heat treatment process of the nucleation treatment and the crystallization treatment, it is preferred to control the heating rate to 5°C/min to 15°C/min, more preferably 10°C/min.

In the present disclosure, after the heat treatment, those skilled in the art may also perform other conventional steps to obtain a glass-ceramic sample satisfying the desired specifications or requirements, for example, a shaping treatment, a cutting treatment (e.g., cutting using a multi-wire cutter), a CNC (computer numerical control, i.e., a CNC machine tool) machining treatment, a thinning treatment, or a polishing treatment, and the like.

In the present disclosure, the chemical strengthening treatment, i.e., the ion exchange method, is performed by immersing the glass-ceramic in a molten salt bath, so that alkali metal ions with a smaller ionic radius in the glass-ceramic exchange with alkali metal ions with a larger ionic radius in the molten salt bath, thereby forming a compressive stress layer on the surface of the glass-ceramic, and obtaining a chemically strengthened glass-ceramic with better mechanical performance.

In some embodiments of the present disclosure, the chemical strengthening treatment may be a single-step strengthening method or a multi-step strengthening method. The molten salt bath used in the chemical strengthening treatment is a molten salt bath containing a sodium salt and/or a potassium salt. Preferably, the molten salt bath used in the chemical strengthening treatment of the present disclosure is a mixed molten salt bath containing a sodium salt and a potassium salt, and the temperature of the molten salt bath is preferably 380°C to 550°C. In some embodiments of the present disclosure, the concentration of the potassium salt in the salt bath is preferably 1 wt% to 95 wt%, and the concentration of the sodium salt is 5 wt% to 99 wt%. More preferably, a certain amount (e.g., 0.01 wt% to 0.3 wt%) of a lithium salt is added to the salt bath. In some embodiments of the present disclosure, the time of the chemical strengthening treatment is preferably 0.1 hour to 24 hours. The sodium salt may be at least one selected from the group consisting of sodium nitrate, sodium sulfate, and sodium carbonate, preferably sodium nitrate; the potassium salt may be at least one selected from the group consisting of potassium nitrate, potassium sulfate, and potassium carbonate, preferably potassium nitrate; the lithium salt may be at least one selected from the group consisting of lithium nitrate, lithium sulfate, and lithium carbonate, preferably lithium nitrate.

The chemically strengthened glass-ceramic having an excellent performance provided in the present disclosure can be used in electronic devices, including but not limited to mobile phones, tablet computers, handheld game consoles, portable digital devices (e.g., digital cameras), vehicle-mounted central control, electronic whiteboard glass, smart home, and smart wearables (e.g., smart bracelets, smart watches, and smart glasses), and can also be used in vehicles, aircraft, or watercraft, and can also be used in any glass article requiring a chemically strengthened glass-ceramic. For example, it can be used in display screens, cover glasses, touch screens, inner glass screens, or inner frames of electronic devices; for example, it can be used in windshields, such as front windshields or side windshields, of vehicles, aircraft, or watercraft. For example, it can be used in work surfaces, other surfaces, appliance doors, floor tiles, wall panels, or storage containers. Other surfaces may include, but are not limited to, exterior wall surfaces, stair tread surfaces, column facing surfaces, or countertop surfaces; storage containers may include, but are not limited to, cups, plates, medicine bottles, or beverage bottles.

Exemplarily, the chemically strengthened glass-ceramic having an excellent performance provided in the present disclosure can be used to manufacture a glass article. The glass article referred to here may be regular or irregular, and those skilled in the art can manufacture according to requirements.

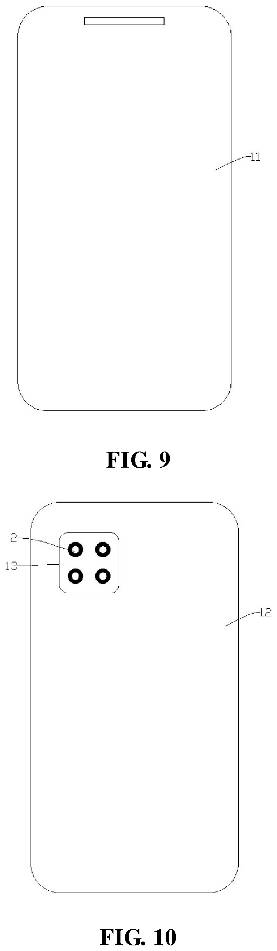

Exemplarily, the chemically strengthened glass-ceramic having an excellent performance provided in the present disclosure can be used to manufacture a cover glass. The cover glass may be a display screen cover plate, a back cover, or a camera protection cover plate of an electronic device. Exemplarily, the chemically strengthened glass-ceramic having an excellent performance provided in the present disclosure can be used in an electronic device. Referring to FIG. 9, FIG. 10, and FIG. 11, an embodiment of the present disclosure provides an electronic device. The electronic device may be a mobile phone, a tablet computer, a smart wearable device, or other electronic products. The electronic device includes a housing 1 assembled on the outside of the electronic device, and a circuit board, a battery, and other components located inside the housing 1. The housing 1 includes a display screen cover plate 11 assembled on the front side and a back cover 12 assembled on the rear side. The display screen cover plate 11 is disposed over a display module 4. The display screen cover plate 11 and/or the back cover 12 may be made of the aforementioned chemically strengthened glass-ceramic. In the embodiments of the present disclosure, the display screen cover plate 11 and the back cover 12 may be entirely made of the aforementioned chemically strengthened glass-ceramic, or may be only partially made of the aforementioned chemically strengthened glass-ceramic. In the embodiments of the present disclosure, the display screen may be a touch display screen, and the display screen cover plate 11 may be a protection cover plate disposed on the touch display screen. In the embodiments of the present disclosure, the back cover 12 may cover only the rear side of the electronic device (i.e., the side facing away from the display screen), or may cover both the rear side and the side frame of the electronic device. Optionally, the back cover 12 may cover all side frames around the electronic device, or may cover a portion of the side frames.

In some embodiments of the present disclosure, as shown in FIG. 10, the electronic device further includes a camera assembly 2 located inside the housing 1. The housing 1 may include a camera protection cover plate 13. The camera protection cover plate 13 is disposed over the camera assembly 2 to protect the camera assembly 2. The camera protection cover plate 13 is made of the aforementioned chemically strengthened glass-ceramic. In the embodiments of the present disclosure, the camera protection cover plate 13 may be partially made of the aforementioned chemically strengthened glass-ceramic, or may be entirely made of the aforementioned chemically strengthened glass-ceramic. In the embodiments of the present disclosure, the position of the camera protection cover plate 13 is determined according to the position of the camera assembly 2, and may be located on the front side of the electronic device, or may be located on the rear side of the electronic device. In some embodiments of the present disclosure, the camera protection cover plate 13 may be a separate structure from the display screen cover plate 11 or the back cover 12. In other embodiments of the present disclosure, the camera protection cover plate 13 may also be an integral structure with the display screen cover plate 11 or the back cover 12.

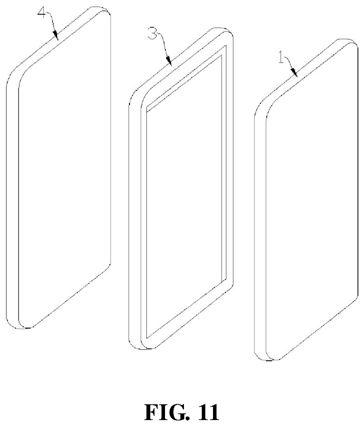

In some embodiments of the present disclosure, as shown in FIG. 11, the electronic device further includes a middle frame 3 located between the display module 4 and the housing 1. The middle frame 3 may comprise the aforementioned chemically strengthened glass-ceramic.

In the embodiments of the present disclosure, in the electronic device, any one of the display screen cover plate, the back cover, the camera protection cover plate, and the middle frame may be made of the aforementioned chemically strengthened glass-ceramic, or any two of them may be made of the aforementioned chemically strengthened glass-ceramic, or any three of them may be made of the aforementioned chemically strengthened glass-ceramic, or all four may be made of the aforementioned chemically strengthened glass-ceramic.

The technical solutions of the present disclosure are further described in detail below with reference to the examples. The examples of the present disclosure described in detail below are exemplary, only for explaining the present disclosure, and cannot be construed as limiting the present disclosure.

### Example 1

### I. Preparation of base glass

Raw materials were prepared according to the proportions of the oxides in Table 1. The total mass of the prepared raw materials was 1000 g, and 5 g of sodium chloride (NaCl) was added to the prepared raw materials. The mixture was then mixed in a V-type mixer for more than 30 minutes to obtain a uniformly mixed raw material mixture.

The uniformly mixed raw material mixture was transferred to a platinum crucible, then melted in a 1600°C lift furnace for 5 hours, then poured into a forming mold to be formed and cooled. After cooling to about 900°C, it was placed in an annealing furnace at 470°C for annealing for 12 hours, and then cooled to room temperature with the furnace to obtain a base glass brick.

### II. Preparation of glass-ceramic

The base glass brick was sequentially subjected to a nucleation treatment and a crystallization treatment to prepare a transparent glass-ceramic sample brick. Based on mole percentage of oxides, the composition of the obtained glass-ceramic was the same as that of the base glass, as detailed in Table 1.

In order to obtain the glass-ceramic product of Example 1 of the present disclosure, during the nucleation treatment, the temperature was raised to the nucleation temperature at a heating rate of 10°C/min, the nucleation temperature was 570°C, and the nucleation treatment time was 240 min; during the crystallization treatment, the temperature was raised from the nucleation temperature to the crystallization temperature at a heating rate of 10°C/min, the crystallization temperature was 715°C, and the crystallization treatment time was 90 min. The nucleation treatment time here refers to the time for holding the temperature after the crystallization furnace was heated to the set nucleation temperature at the set heating rate. The crystallization treatment time here refers to the time for holding the temperature after the crystallization furnace was heated to the set crystallization temperature at the set heating rate.

The obtained glass-ceramic sample brick was sequentially subjected to cold working treatments, including cutting, CNC machining (the model of the CNC instrument used in the present disclosure was: RCG500S), and polishing to prepare glass-ceramic samples satisfying the desired specifications and requirements. In the present disclosure, the glass-ceramic sample brick was subjected to the aforementioned cold working treatments to prepare glass-ceramic polished sheet samples with a length and width specification of 50 mm × 50 mm and a thickness ranging from 0.4 mm to 0.70 mm, as detailed in Table 3.

### III. Preparation of chemically strengthened glass-ceramic

The glass-ceramic polished sheet obtained above was subjected to a one-step chemical strengthening treatment in a mixed salt at 500°C for a strengthening time of 5.0 hours. The composition of the mixed salt was: 98.97 wt% NaNO₃ + 1.0 wt% KNO₃ + 0.03 wt% LiNO₃.

After the chemical strengthening treatment, the glass-ceramic sample was taken out and allowed to slowly cool to room temperature on the strengthening furnace body, and then the salt wrapped on the surface of the glass-ceramic was washed off with clean water. After the glass-ceramic sample was dried, a chemically strengthened glass-ceramic was obtained.

Test results for the glass-ceramic or chemically strengthened glass-ceramic obtained in Example 1:
The crystalline phase composition, crystallinity, average grain size, optical b-value, transmittance (under light with a wavelength of 550 nm), thermal expansion softening point, density, refractive index, and Young's modulus of the glass-ceramic sample were tested, respectively. The results are shown in Table 2.

The thickness *T*, DOL_0, CS_80, |CT_AV|, CT_LD, DOL_0/T, ${\int }_{0}^{80} CS \left(t\right) dt$, |K_{80µm}|, the value of formula *A*, the value of formula *B*, F_{80µm}, and the average drop height in the sandpaper drop resistance test of the chemically strengthened glass-ceramic sample were respectively measured or calculated based on the test results. The results are shown in Table 3.

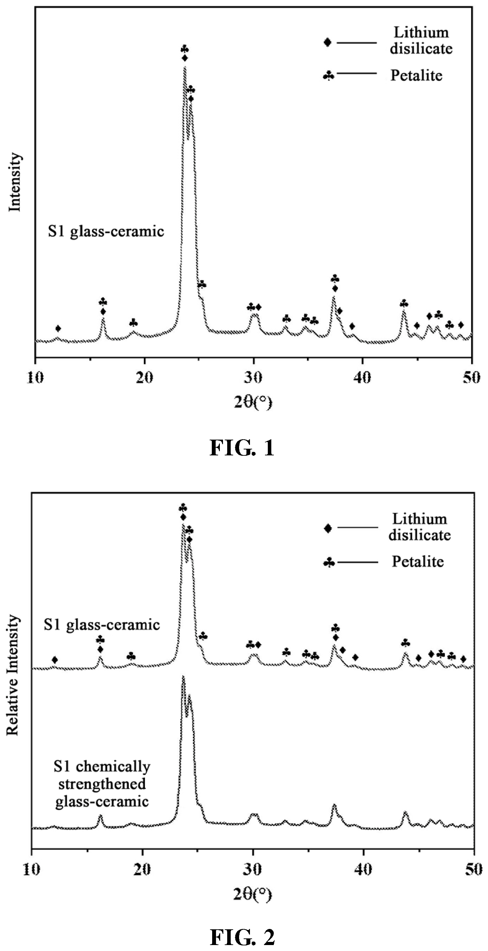

The XRD pattern of the glass-ceramic of Example 1 is shown in FIG. 1, and the XRD pattern comparison of the glass-ceramic and the chemically strengthened glass-ceramic of Example 1 is shown in FIG. 2. It can be seen from FIG. 1 and FIG. 2 that, in the present disclosure, the main crystalline phases in both the glass-ceramic and the chemically strengthened glass-ceramic are the lithium disilicate crystalline phase and the petalite crystalline phase, and the crystalline phase structure of the glass-ceramic did not change significantly before and after the chemical strengthening treatment.

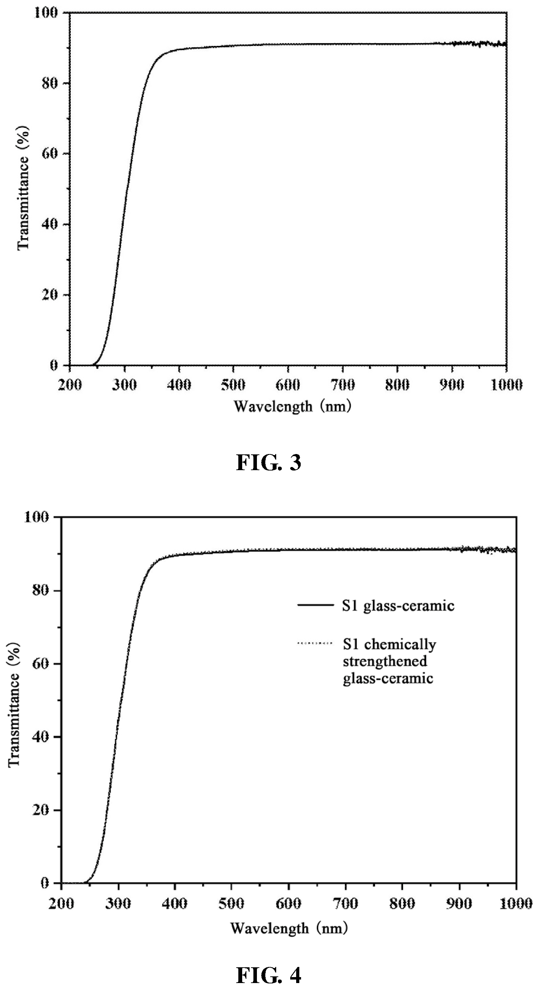

The transmittance curve of the glass-ceramic of Example 1 is shown in FIG. 3, and the transmittance curve comparison of the glass-ceramic and the chemically strengthened glass-ceramic provided in Example 1 is shown in FIG. 4. It can be seen from FIG. 3 and FIG. 4 that, in the present disclosure, both the glass-ceramic and the chemically strengthened glass-ceramic are transparent in the visible light range and have high transmittance, and the transmittance of the glass-ceramic did not change significantly before and after the chemical strengthening treatment.

### Examples 2 to 13

These examples were carried out with reference to Example 1, with the differences being that the thickness, optical results, strengthening process, and post-strengthening stress test results were different, as shown in Tables 2 and 3, respectively.

### Examples 14 to 15

These examples were carried out with reference to Example 1, with the differences being that the composition, thickness, optical results, and post-strengthening stress test results were different, as shown in Tables 1 to 3, respectively.

### Comparative Examples 1 to 6

These examples were carried out with reference to Example 1, with the differences being that the thickness, optical results, strengthening process, and post-strengthening stress test results were different, as shown in Tables 2 and 3, respectively.

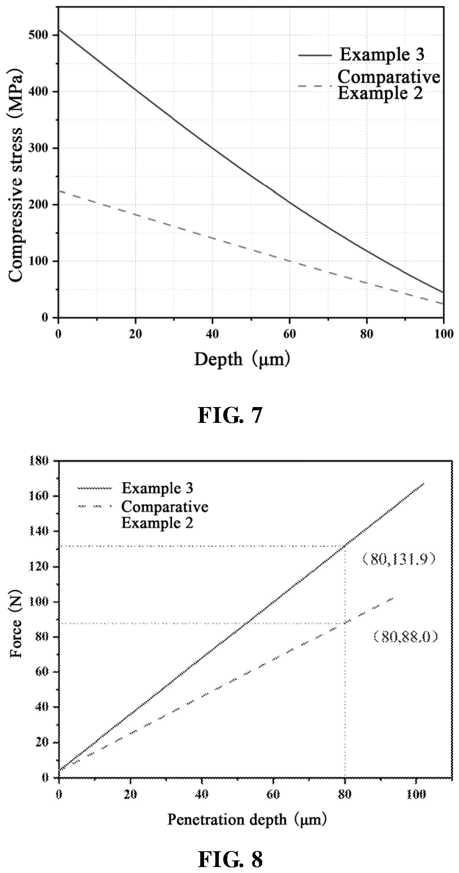

The surface compressive stress curves (or referred to as compressive stress curves) of Example 3 and Comparative Example 2 are shown in FIG. 7. From this figure, it can be seen that the area enclosed by the compressive stress curve of the chemically strengthened glass-ceramic provided in Example 3 and the straight line y = 0, the straight line x = 0, and the straight line x = 80 µm is larger than that of Comparative Example 2. Therefore, the integrated area of the compressive stress curve of the chemically strengthened glass-ceramic provided in Example 3 in the interval h ∈ [0 µm, 80 µm] is larger than that of Comparative Example 2.

The relationship between penetration depth and applied force when performing a penetration resistance test with an M6 Mohs hardness pen on the chemically strengthened glass-ceramic of Example 3 and Comparative Example 2 is shown in FIG. 8. From this figure, it can be seen that the force required for the chemically strengthened glass-ceramic provided in Example 3 to be penetrated to a depth of 80 µm is significantly greater than that of Comparative Example 2.

**Table 1**

| Oxide (mol%) | Examples 1 to 13 | Example 14 | Example 15 | Comparative Examples 1 to 6 |
|---|---|---|---|---|
| SiO₂ | 68.02 | 64.39 | 68.74 | 68.02 |
| Al₂O₃ | 4.30 | 4.07 | 4.41 | 4.3 |
| P₂O₅ | 1.17 | 1.14 | 0.95 | 1.17 |
| ZrO₂ | 2.88 | 2.98 | 2.89 | 2.88 |
| Na₂O | 0.15 | 0.78 | 0 | 0.15 |
| K₂O | 0.07 | 0.07 | 0 | 0.07 |
| Li₂O | 22.40 | 25.68 | 21.48 | 22.4 |
| CaO | 0.93 | 0.89 | 0.73 | 0.93 |
| B₂O₃ | 0.08 | 0 | 0.8 | 0.08 |

| Content relationships satisfied by some oxides | | | | |
|---|---|---|---|---|
| ([ZrO₂] + [CaO] + [P₂O₅])/ Exp([Na₂O] + [K₂O] + [B₂O₃]) | 4.97% | 4.97% | 4.53% | 4.97% |
| [P₂O₅] + [Al₂O₃] | 5.47% | 5.21% | 5.36% | 5.47% |
| ([SiO₂] + 2 × [B₂O₃])/[Al₂O₃] | 15.86 | 15.82 | 15.95 | 15.86 |

Note: an oxide content of "0" in Table 1 indicates that the component was not actively or intentionally added to the glass composition in the initial batching process, but the component may be present as an impurity. In the table, the content percentages based on oxide mole are substituted into each formula, wherein only numerical values are used in the calculation, with mole units being disregarded.

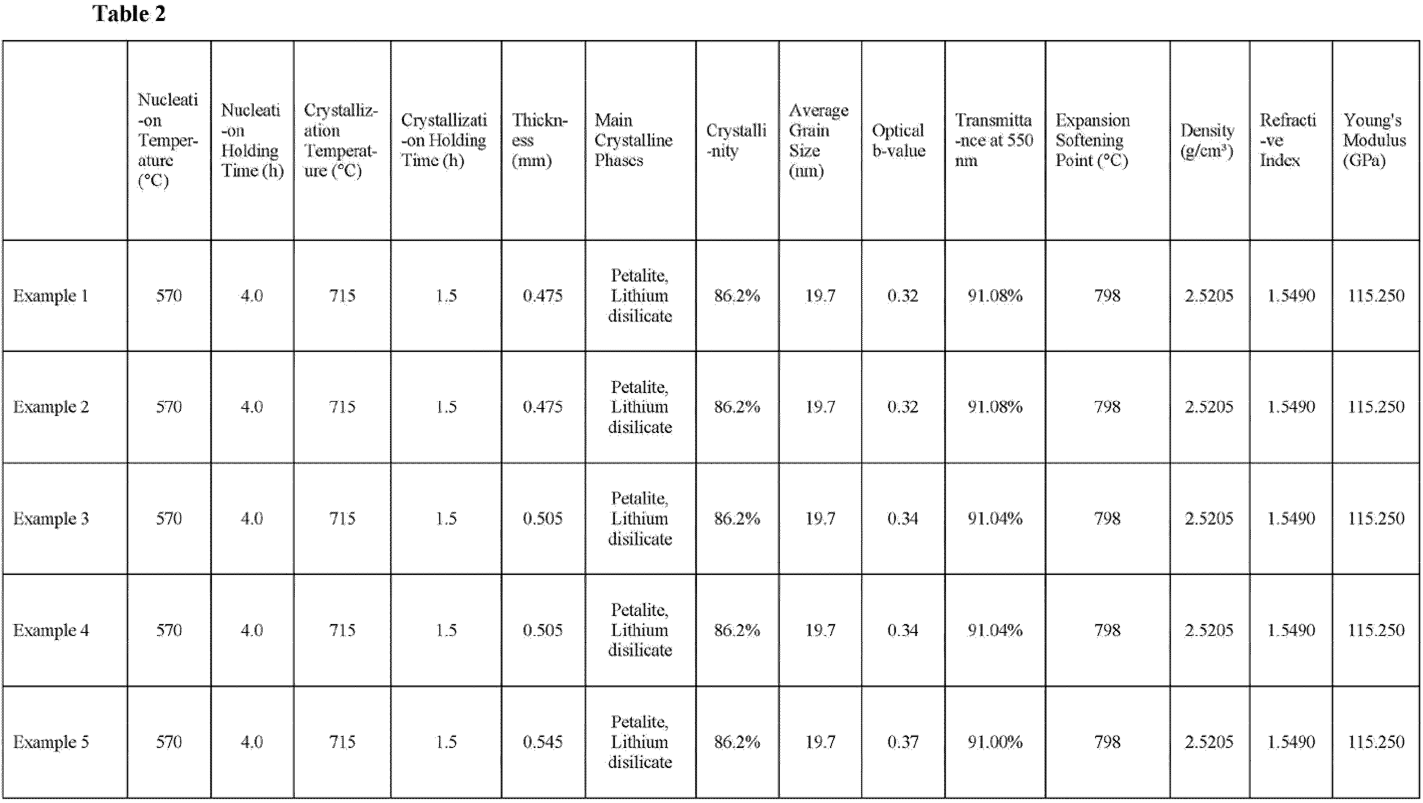

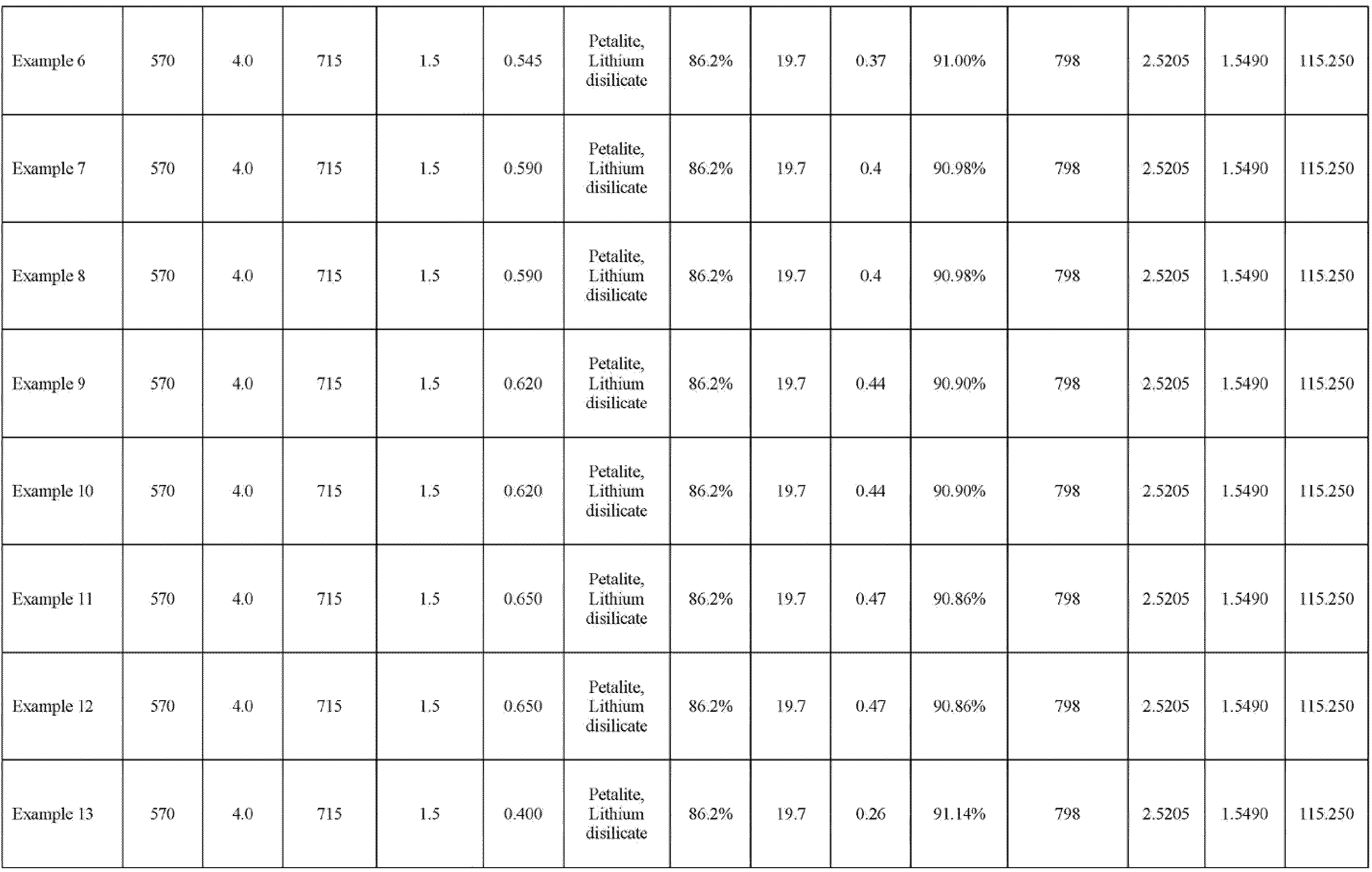

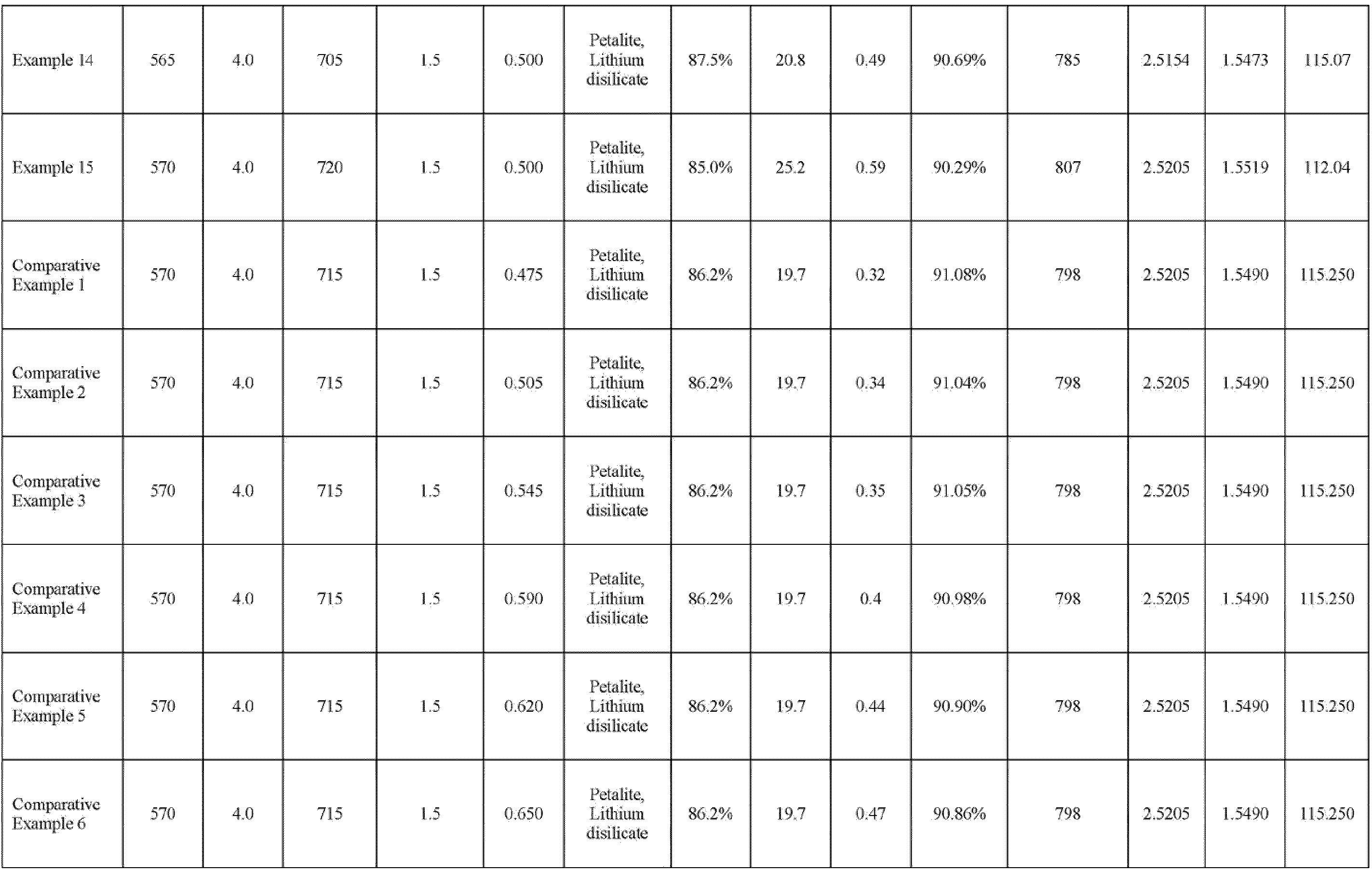

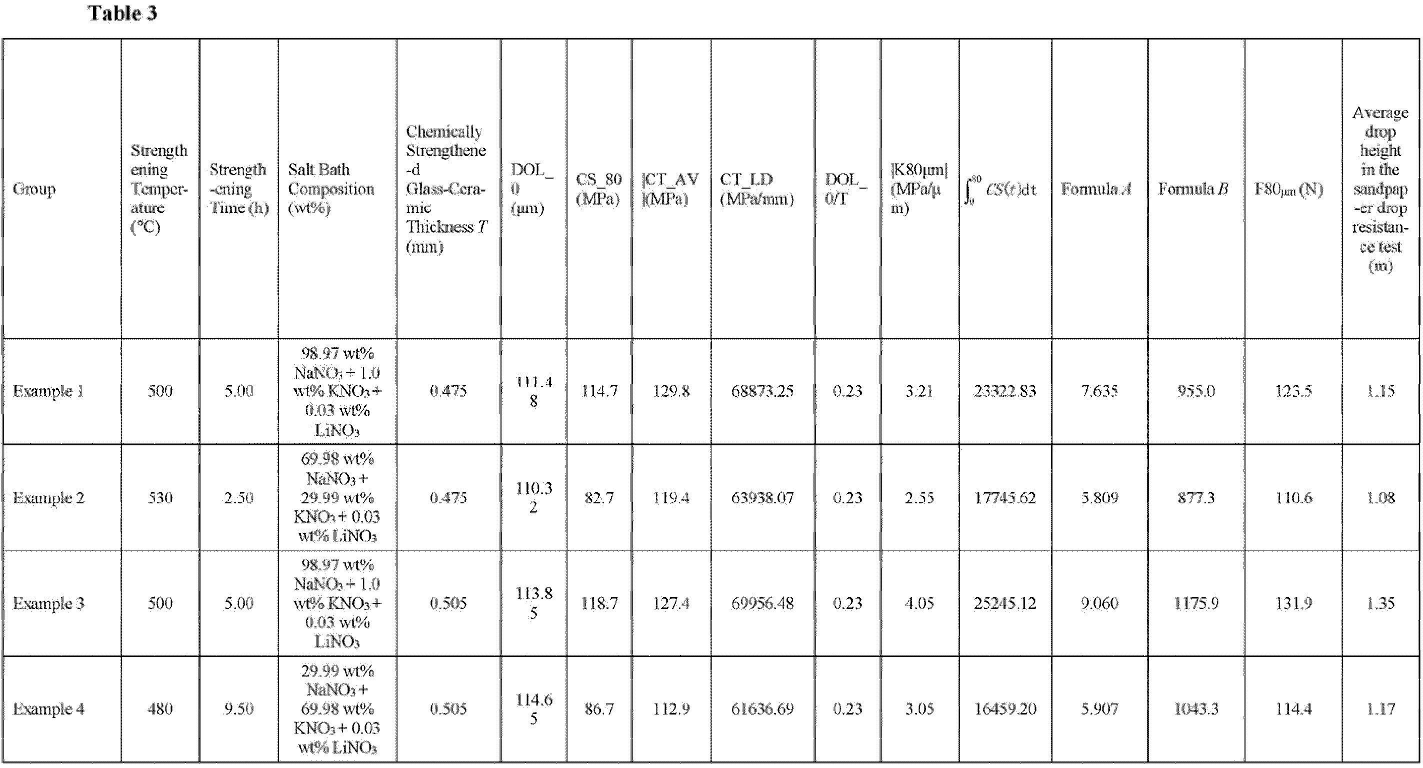

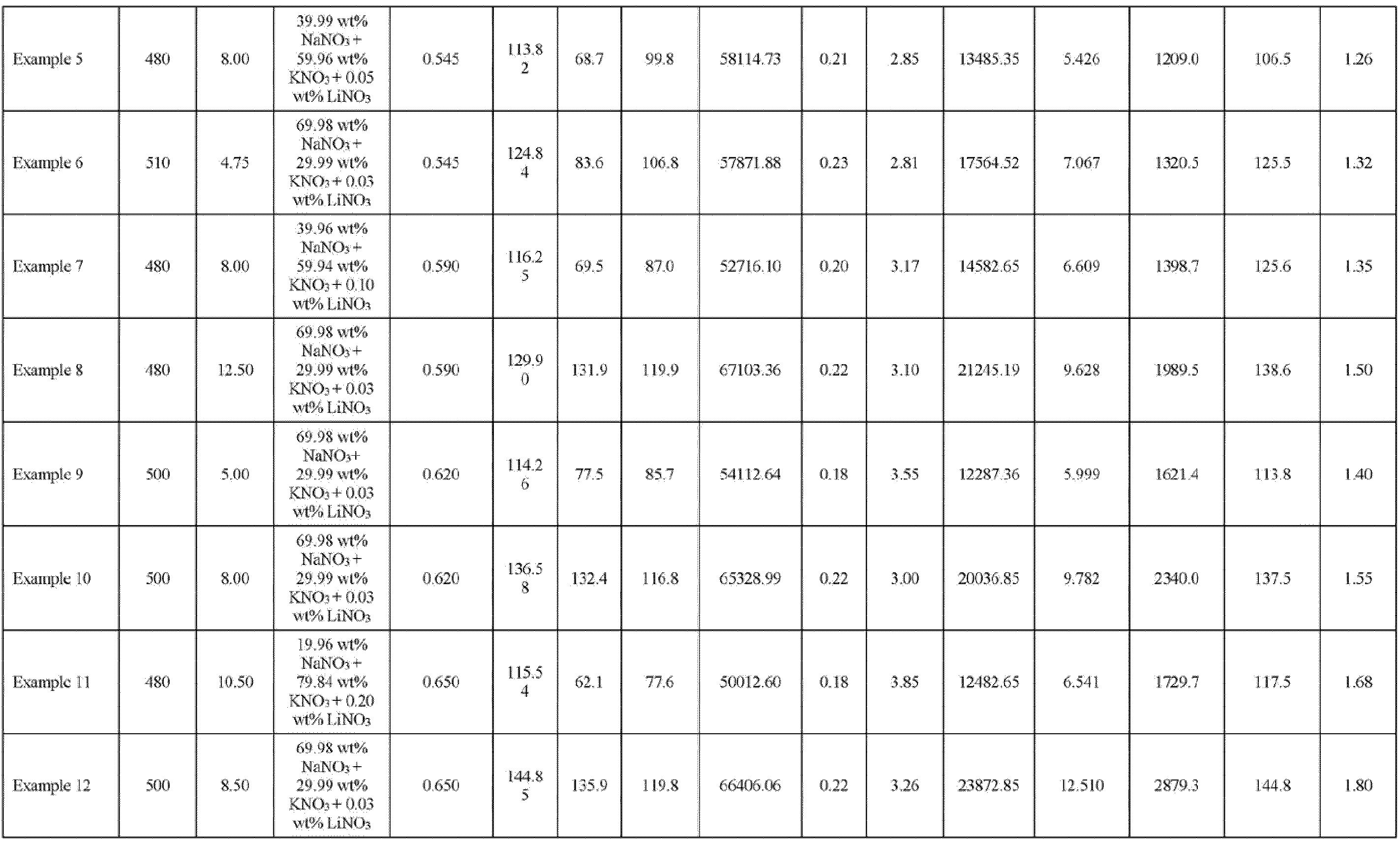

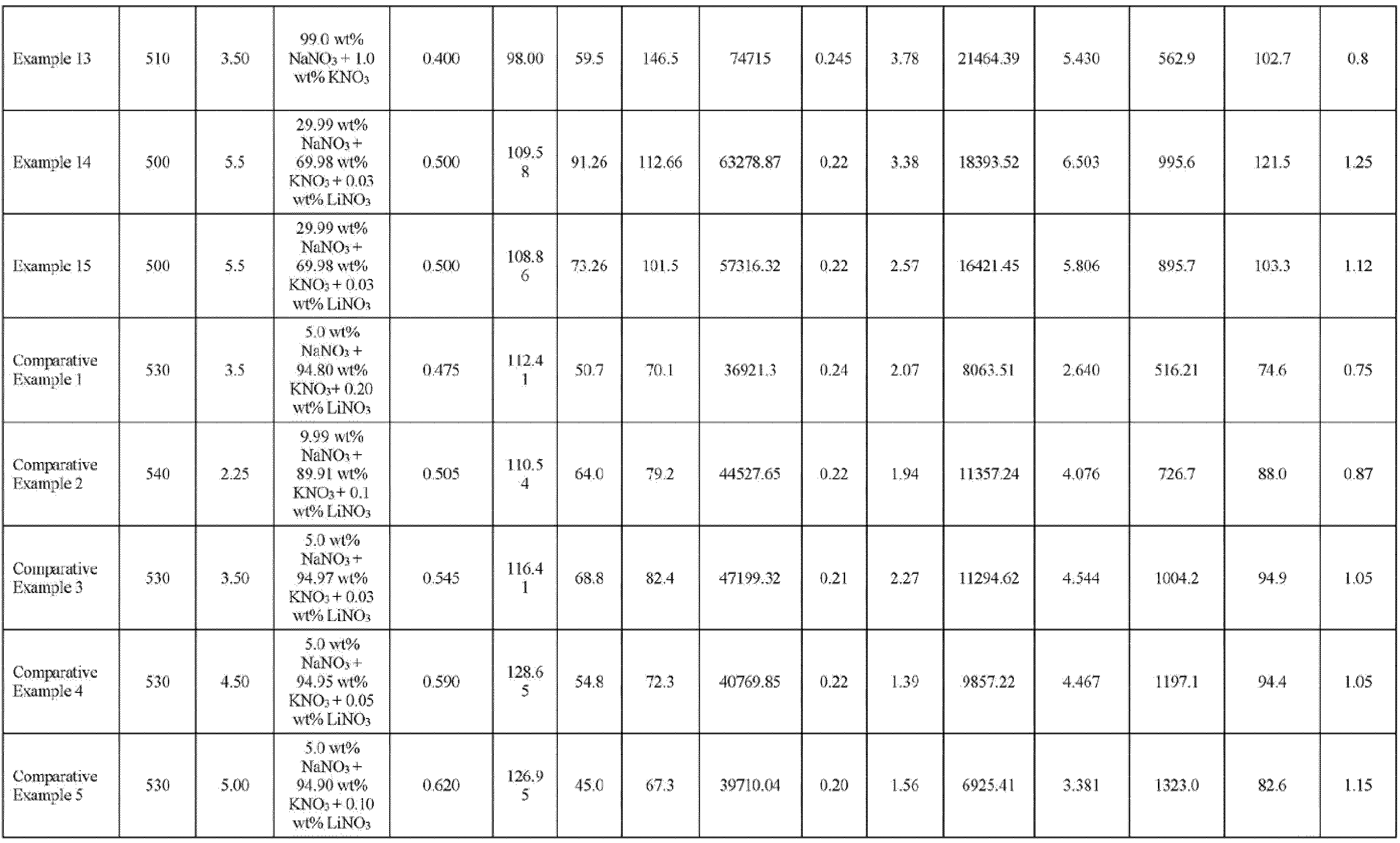

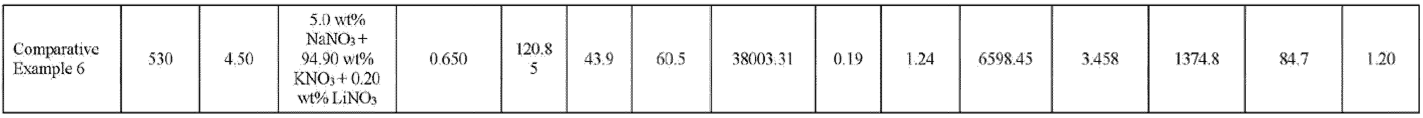

From the examples and comparative examples in Tables 1 to 3 above, it can be seen that compared with the comparative examples, using the example solutions of the present disclosure, by making the chemically strengthened glass-ceramic satisfy a specific crystalline phase structure, making the chemically strengthened glass-ceramic form a microstructure with lithium disilicate and petalite as the main crystalline phases, and making the thickness and stress structure of the chemically strengthened glass-ceramic satisfy specific requirements, not only is the chemically strengthened glass-ceramic endowed with excellent optical performance (e.g., high transmittance and low b-value) and high intrinsic strength (e.g., high Young's modulus), but also the chemically strengthened glass-ceramic at different thicknesses has both excellent resistance performance to penetration by sharp objects and excellent resistance performance to drop damage on rough surfaces, and can satisfy the application requirements of cover glass. The chemically strengthened glass-ceramic of the present disclosure well achieves a synergistic cooperation among thickness, crystalline phase structure, and stress structure, better improves the damage resistance performance of the chemically strengthened glass-ceramic, and in particular ensures the obtainment of a chemically strengthened glass-ceramic product that has both excellent resistance performance to penetration by sharp objects and excellent resistance performance to drop damage on rough surfaces. In addition, the chemically strengthened glass-ceramic of the present disclosure also has excellent resistance performance to penetration by sharp objects and excellent resistance performance to drop damage on rough surfaces even when the thickness is relatively thin, which can reduce the probability of damage to electronic device screens, ensure the aesthetics of the screen, and thus meet the market demand for large-screen, light and thin electronic devices.

In the solutions of Comparative Examples 1 to 6, the thickness and stress structure of the chemically strengthened glass-ceramic did not satisfy the specific requirements of the present disclosure. Eventually, the chemically strengthened glass-ceramic prepared in each comparative example could not satisfy having both excellent resistance performance to penetration by sharp objects and excellent resistance performance to drop damage on rough surfaces.

The above are only specific embodiments of the present disclosure and are not intended to limit the present disclosure. For those skilled in the art, the present disclosure may have various modifications and changes. Any modifications, equivalent substitutions, improvements, etc. made within the spirit and principle of the present disclosure shall be included in the protection scope of the present disclosure.

### Industrial applicability

By making the chemically strengthened glass-ceramic satisfy a specific crystalline phase structure and making the thickness and stress structure of the chemically strengthened glass-ceramic satisfy specific requirements, the present disclosure well achieves a synergistic cooperation among thickness, crystalline phase structure, and stress structure, thereby better improving the damage resistance performance of the chemically strengthened glass-ceramic, enabling the chemically strengthened glass-ceramic at different thicknesses to satisfy high strength performance requirements, and ensuring that the chemically strengthened glass-ceramic at different thicknesses has both excellent resistance performance to penetration by sharp objects and excellent resistance performance to drop damage on rough surfaces. In particular, for cases where the thickness is required to be relatively thin, the chemically strengthened glass-ceramic provided in the present disclosure improves the problem that the existing chemically strengthened glass-ceramic has a need to improve the resistance to penetration by sharp objects and the resistance to drop damage on rough ground after the thickness becomes thinner, and endows the ultra-thin chemically strengthened glass-ceramic with excellent resistance performance to penetration by sharp objects and excellent resistance performance to drop damage on rough surfaces. At the same time, the chemically strengthened glass-ceramic of the present disclosure maintains excellent optical performance and can satisfy the application requirements of cover glass.

## Claims

1. A chemically strengthened glass-ceramic, wherein the chemically strengthened glass-ceramic comprises a petalite crystalline phase and a lithium disilicate crystalline phase, wherein the petalite crystalline phase and the lithium disilicate crystalline phase have a higher mass percentage than other crystalline phases present in the chemically strengthened glass-ceramic;
the chemically strengthened glass-ceramic has a compressive stress layer on a surface thereof and has a tensile stress inside; the chemically strengthened glass-ceramic satisfies: $90 μm \leq DOL _ 0 ;$ $A = {T}^{1.5} \times {\int }_{0}^{80} CS \left(t\right) dt / 1000 ,$ a value of *A* is 5 to 15;
wherein *T* is a thickness of the chemically strengthened glass-ceramic, in mm; t is a depth from a main surface of the chemically strengthened glass-ceramic, *CS*(t) is a compressive stress value at depth t, ${\int }_{0}^{80} CS \left(t\right) dt$ is a compressive stress integral of the compressive stress layer from any main surface of the chemically strengthened glass-ceramic to a depth of 80 µm from the main surface, in MPa·µm; in formula *A*, data are substituted for calculation according to the above unit requirements, and a calculation result of formula *A* is obtained, wherein only numerical values are used in the calculation, with units being disregarded.

2. The chemically strengthened glass-ceramic according to claim 1, wherein the chemically strengthened glass-ceramic satisfies: $B = \left|CT_AV\right| \times DOL _ 0 \times \left(1000\times {T}^{2.8}-2\times DOL_0\times {T}^{1.8}\right) / 1000 ,$ a value of *B* is 550 to 3500;
wherein *T* is the thickness of the chemically strengthened glass-ceramic, in mm; |CT_AV| is an absolute value of an average tensile stress, in MPa; DOL_0 is a depth of the compressive stress layer, in µm; in formula *B*, data are substituted for calculation according to the above unit requirements, and a calculation result of formula *B* is obtained, wherein only numerical values are used in the calculation, with units being disregarded.

3. The chemically strengthened glass-ceramic according to claim 1 or 2, wherein the thickness of the chemically strengthened glass-ceramic *T* ≤ 1 mm, preferably, the thickness of the chemically strengthened glass-ceramic *T* is 0.3 mm to 1 mm, more preferably, the thickness of the chemically strengthened glass-ceramic *T* is 0.35 mm to 0.7 mm.

4. The chemically strengthened glass-ceramic according to any one of claims 1 to 3, wherein the chemically strengthened glass-ceramic satisfies: $35000 MPa ⋅ μm \geq {\int }_{0}^{B 0} CS \left(t\right) dt \geq 10000 MPa ⋅ μm ,$ preferably, $30000 MPa ⋅ μm \geq {\int }_{0}^{B 0} CS \left(t\right) dt \geq 10000 MPa ⋅ μm ,$ more preferably, $30000 MPa ⋅ μm \geq {\int }_{0}^{B 0} CS \left(t\right) dt \geq 15000 MPa ⋅ μm .$

5. The chemically strengthened glass-ceramic according to any one of claims 1 to 4, wherein the chemically strengthened glass-ceramic satisfies:
70 MPa ≤ |CT_AV| ≤ 160 MPa, preferably, 77 MPa ≤ |CT_AV| ≤ 160 MPa, more preferably, 110 MPa ≤ |CT_AV| ≤ 150 MPa, wherein |CT_AV| is the absolute value of the average tensile stress; and/or,
0.17 ≤ DOL_0/T ≤ 0.25, preferably, 0.18 ≤ DOL_0/T ≤ 0.25; and/or,
50000 MPa/mm ≤ CT_LD ≤ 80000 MPa/mm, preferably, 55000 MPa/mm ≤ CT_LD ≤ 80000 MPa/mm, more preferably, 61000 MPa/mm ≤ CT_LD ≤ 75000 MPa/mm, wherein CT_LD is a tensile stress linear density; and/or,
90 µm ≤ DOL_0, preferably, 90 µm ≤ DOL_0 ≤ 200 µm, more preferably, 95 µm ≤ DOL_0 ≤ 150 µm, wherein DOL_0 is the depth of the compressive stress layer.

6. The chemically strengthened glass-ceramic according to any one of claims 1 to 5, wherein the chemically strengthened glass-ceramic satisfies:
a value of *T* is: 0.475 mm, 0.505 mm, 0.545 mm, 0.590 mm, 0.620 mm, 0.650 mm, 0.500 mm or 0.400 mm; and/or,
the value of *A* is: 7.635, 5.809, 9.060, 5.907, 5.426, 7.067, 6.609, 9.628, 5.999, 9.782, 6.541, 12.510, 6.503, 5.806 or 5.430; and/or,
the value of *B* is: 955.0, 877.3, 1175.9, 1043.3, 1209.0, 1320.5, 1398.7, 1989.5, 1621.4, 2339.9, 1729.7, 2879.3, 995.6, 895.9 or 562.9; and/or,
a value of ${\int }_{0}^{80} CS \left(t\right) dt$ is: 23322.83 MPa·µm, 17745.62 MPa·µm, 25245.12 MPa·µm, 16459.20 MPa·µm, 13485.35 MPa·µm, 17564.52 MPa·µm, 14582.65 MPa·µm, 21245.19 MPa·µm, 12287.36 MPa·µm, 20036.85 MPa·µm, 12482.65 MPa·µm, 23872.85 MPa·µm, 18393.52 MPa·µm, 16421.45 MPa·µm or 21464.39 MPa·µm; and/or,
a value of DOL_0 is: 111.48 µm, 110.32 µm, 113.85 µm, 114.65 µm, 113.82 µm, 124.84 µm, 116.25 µm, 129.90 µm, 114.26 µm, 136.58 µm, 115.54 µm, 144.85 µm, 109.58 µm, 108.86 µm or 98.00 µm; and/or,
a value of |CT_AV| is: 129.8 MPa, 119.4 MPa, 127.4 MPa, 112.9 MPa, 99.8 MPa, 106.8 MPa, 87.0 MPa, 119.9 MPa, 85.7 MPa, 116.8 MPa, 77.6 MPa, 119.8 MPa, 112.66 MPa, 101.5 MPa or 146.5 MPa; and/or,
a value of DOL_0/T is: 0.25, 0.23, 0.21, 0.20, 0.22, 0.19 or 0.18; and/or,
a value of CT_LD is: 68873.25 MPa/mm, 63938.07 MPa/mm, 69956.48 MPa/mm, 61636.69 MPa/mm, 58114.73 MPa/mm, 57871.88 MPa/mm, 52716.10 MPa/mm, 67103.36 MPa/mm, 54112.64 MPa/mm, 65328.99 MPa/mm, 50012.60 MPa/mm, 66406.06 MPa/mm, 63278.87 MPa/mm, 57316.32 MPa/mm or 74715.00 MPa/mm.

7. The chemically strengthened glass-ceramic according to any one of claims 1 to 6, wherein a composition at a center or of a tensile stress layer of the chemically strengthened glass-ceramic comprises:
SiO₂: 64% to 70%, Al₂O₃: 3.5% to 5.0%, P₂O₅: 0.7% to 1.5%, ZrO₂: 1.5% to 3%, Na₂O: 0% to 3%, K₂O: 0% to 1%, Li₂O: 20% to 26%, CaO: 0% to 1.5%, B₂O₃: 0% to 2%, based on mole percentage of oxides.

8. The chemically strengthened glass-ceramic according to any one of claims 1 to 7, wherein the composition at the center or of the tensile stress layer of the chemically strengthened glass-ceramic comprises:
a mole percentage of SiO₂ is 64% to 69.5%, preferably, the mole percentage of SiO₂ is 67.5% to 69.5%; and/or,
a mole percentage of Al₂O₃ is 4% to 4.8%, preferably, the mole percentage of Al₂O₃ is 4% to 4.5%; and/or,
a mole percentage of P₂O₅ is 0.8% to 1.5%, preferably, the mole percentage of P₂O₅ is 0.8% to 1.2%; and/or,
a mole percentage of ZrO₂ is 2.5% to 3%, preferably, the mole percentage of ZrO₂ is 2.6% to 3%; and/or,
a mole percentage of Na₂O is 0% to 2%, preferably, the mole percentage of Na₂O is 0% to 1%; and/or,
a mole percentage of K₂O is 0% to 0.5%, preferably, the mole percentage of K₂O is 0% to 0.3%; and/or,
a mole percentage of Li₂O is 20.5% to 25%, preferably, the mole percentage of Li₂O is 20.5% to 23.5%; and/or,
a mole percentage of CaO is 0% to 1%, preferably, the mole percentage of CaO is 0.5% to 1%; and/or,
a mole percentage of B₂O₃ is 0% to 1%, preferably, the mole percentage of B₂O₃ is 0% to 0.8%;
based on mole percentage of oxides.

9. The chemically strengthened glass-ceramic according to any one of claims 1 to 8, wherein the composition at the center or of the tensile stress layer of the chemically strengthened glass-ceramic comprises:
the mole percentage of SiO₂ is 68.02%, 64.39% or 68.74%; and/or,
the mole percentage of Al₂O₃ is 4.30%, 4.07% or 4.41%; and/or,
the mole percentage of P₂O₅ is 1.17%, 1.14% or 0.95%; and/or,
the mole percentage of ZrO₂ is 2.88%, 2.98% or 2.89%; and/or,
the mole percentage of Na₂O is 0.15%, 0.78% or 0%; and/or,
the mole percentage of K₂O is 0.07% or 0%; and/or,
the mole percentage of Li₂O is 22.40%, 25.68% or 21.48%; and/or,
the mole percentage of CaO is 0.89%, 0.93% or 0.73%; and/or,
the mole percentage of B₂O₃ is 0.08%, 0.8% or 0%;
based on mole percentage of oxides.

10. The chemically strengthened glass-ceramic according to any one of claims 1 to 9, wherein in the composition at the center or of the tensile stress layer of the chemically strengthened glass-ceramic, the mole percentage of ZrO₂ [ZrO₂], the mole percentage of CaO [CaO], the mole percentage of P₂O₅ [P₂O₅], the mole percentage of Na₂O [Na₂O], the mole percentage of K₂O [K₂O], the mole percentage of B₂O₃ [B₂O₃], the mole percentage of Al₂O₃ [Al₂O₃] and the mole percentage of SiO₂ [SiO₂] satisfy the following relationships:
3.5% ≤ ([ZrO₂] + [CaO] + [P₂O₅])/EXP([Na₂O] + [K₂O] + [B₂O₃]) ≤ 5.5%, preferably, 4.5% ≤ ([ZrO₂] + [CaO] + [P₂O₅])/EXP([Na₂O] + [K₂O] + [B₂O₃]) ≤ 5%; and/or,
5% ≤ [P₂O₅] + [Al₂O₃] ≤ 6%, preferably, 5.2% ≤ [P₂O₅] + [Al₂O₃] ≤ 5.5%; and/or,
15 ≤ ([SiO₂] + 2 × [B₂O₃])/[Al₂O₃] ≤ 17, preferably, 15 ≤ ([SiO₂] + 2 × [B₂O₃])/[Al₂O₃] ≤ 16.5.

11. The chemically strengthened glass-ceramic according to any one of claims 1 to 10, wherein in the composition at the center or of the tensile stress layer of the chemically strengthened glass-ceramic, the mole percentage of ZrO₂ [ZrO₂], the mole percentage of CaO [CaO], the mole percentage of P₂O₅ [P₂O₅], the mole percentage of Na₂O [Na₂O], the mole percentage of K₂O [K₂O], the mole percentage of B₂O₃ [B₂O₃], the mole percentage of Al₂O₃ [Al₂O₃] and the mole percentage of SiO₂ [SiO₂] satisfy the following relationships:
a value of ([ZrO₂] + [CaO] + [P₂O₅])/EXP([Na₂O] + [K₂O] + [B₂O₃]) is 4.97% or 4.53%; and/or,
a value of [P₂O₅] + [Al₂O₃] is 5.21%, 5.47% or 5.36%; and/or
a value of ([SiO₂] + 2 × [B₂O₃])/[Al₂O₃] is 15.86, 15.82 or 15.95.

12. The chemically strengthened glass-ceramic according to any one of claims 1 to 11, wherein a sum of masses of the petalite crystalline phase and the lithium disilicate crystalline phase accounts for more than 80 wt% of all crystalline phases of the chemically strengthened glass-ceramic,
preferably, the sum of the masses of the petalite crystalline phase and the lithium disilicate crystalline phase accounts for 85 wt% to 100 wt% of all crystalline phases of the chemically strengthened glass-ceramic.

13. The chemically strengthened glass-ceramic according to any one of claims 1 to 12, wherein in the chemically strengthened glass-ceramic, an average grain size does not exceed 100 nm, preferably, the average grain size does not exceed 50 nm, more preferably, the average grain size is 15 nm to 30 nm; and/or
a crystallinity of the chemically strengthened glass-ceramic is not less than 70%, preferably, the crystallinity of the chemically strengthened glass-ceramic is 80% to 90%, more preferably, the crystallinity of the chemically strengthened glass-ceramic is 85% to 90%.

14. The chemically strengthened glass-ceramic according to any one of claims 1 to 13, wherein a Young's modulus of the chemically strengthened glass-ceramic is greater than 100 GPa, preferably, the Young's modulus is greater than 105 GPa, more preferably, the Young's modulus is 110 GPa to 120 GPa.

15. The chemically strengthened glass-ceramic according to any one of claims 1 to 14, wherein when the thickness of the chemically strengthened glass-ceramic is 0.3 mm to 1 mm, a b-value is < 1.0, preferably, the b-value is < 0.70, more preferably, the b-value is ≤ 0.60; and/or,
the chemically strengthened glass-ceramic is transparent in a visible light wavelength range, preferably, for light with a wavelength of 550 nm, a transmittance of the chemically strengthened glass-ceramic with the thickness ranging from 0.3 mm to 1 mm is ≥ 85%, preferably, the transmittance is ≥ 90.00%, more preferably, the transmittance is ≥ 90.29%.

16. The chemically strengthened glass-ceramic according to any one of claims 1 to 15, wherein on a compressive stress curve of the chemically strengthened glass-ceramic, an absolute value of slope at a depth of 80 µm |K_{80µm}| satisfies 2.5 MPa/µm ≤ |K_{80µm}| ≤ 4.5 MPa/µm, preferably 3.0 MPa/µm ≤ |K_{80µm}| ≤ 4.5 MPa/µm.

17. The chemically strengthened glass-ceramic according to any one of claims 1 to 16, wherein on the compressive stress curve of the chemically strengthened glass-ceramic, the absolute value of the slope at the depth of 80 µm |K_{80µm}| is 3.21 MPa/µm, 2.55 MPa/µm, 4.05 MPa/µm, 3.05 MPa/µm, 2.85 MPa/µm, 2.81 MPa/µm, 3.17 MPa/µm, 3.10 MPa/µm, 3.55 MPa/µm, 3.00 MPa/µm, 3.85 MPa/µm, 3.26 MPa/µm, 3.38 MPa/µm, 2.57 MPa/µm or 3.78 MPa/µm.

18. The chemically strengthened glass-ceramic according to any one of claims 1 to 17, wherein when using a Mohs hardness pen with a Mohs hardness rating of 6 and a pen tip presenting an angle of 35° in horizontal projection, and subjecting the pen tip of the Mohs hardness pen to vertically penetrate into the chemically strengthened glass-ceramic with the thickness not less than 0.35 mm along the thickness direction, and when a penetration depth is 80 µm, a required applied load F_{80µm} is ≥ 100 N, preferably, the required applied load F_{80µm} is ≥ 110 N; and/or,
when subjecting the chemically strengthened glass-ceramic with the thickness not less than 0.35 mm to a sandpaper drop resistance test and using an 80-mesh sandpaper, an average drop height in the sandpaper drop resistance test of the chemically strengthened glass-ceramic is ≥ 0.8 m, preferably, the average drop height in the sandpaper drop resistance test of the chemically strengthened glass-ceramic is ≥ 1.0 m.

19. A cover glass, wherein the cover glass is prepared from the chemically strengthened glass-ceramic according to any one of claims 1 to 18.

20. An electronic device, wherein the electronic device comprises the chemically strengthened glass-ceramic according to any one of claims 1 to 18.

21. The electronic device according to claim 20, wherein the electronic device comprises a housing assembled on the outside of the electronic device and a circuit board located inside the housing, and the housing comprises the chemically strengthened glass-ceramic according to any one of claims 1 to 18.

22. The electronic device according to claim 21, wherein the housing comprises a display screen cover plate assembled on the front side of the electronic device, and the display screen cover plate comprises the chemically strengthened glass-ceramic according to any one of claims 1 to 18.

23. The electronic device according to claim 21 or 22, wherein the housing comprises a back cover assembled on the rear side of the electronic device, and the back cover comprises the chemically strengthened glass-ceramic according to any one of claims 1 to 18.

24. The electronic device according to any one of claims 21 to 23, wherein the electronic device further comprises a camera assembly located inside the housing, the housing comprises a camera protection cover plate, the camera protection cover plate is disposed over the camera assembly, and the camera protection cover plate comprises the chemically strengthened glass-ceramic according to any one of claims 1 to 18.

25. The electronic device according to any one of claims 21 to 24, wherein the electronic device further comprises a middle frame, and the middle frame comprises the chemically strengthened glass-ceramic according to any one of claims 1 to 18.

26. A glass article, wherein the glass article comprises the chemically strengthened glass-ceramic according to any one of claims 1 to 18.
